(19) Europäisches Patentamt
European Patent Office
Office européen des brevets

(11) **EP 3 591 335 B1**

(12) **EUROPEAN PATENT SPECIFICATION**

(45) Date of publication and mention of the grant of the patent:
**24.02.2021 Bulletin 2021/08**

(51) Int Cl.:
***G01B 21/04*** *(2006.01)*      ***G01B 21/30*** *(2006.01)*
***G01B 11/30*** *(2006.01)*      ***G01B 9/02*** *(2006.01)*

(21) Application number: **19181418.5**

(22) Date of filing: **20.06.2019**

(54) **FLATNESS CALIBRATION METHOD AND FLATNESS CALIBRATION DEVICE**

PLANHEITSKALIBRIERUNGSVERFAHREN UND PLANHEITSKALIBRIERUNGSVORRICHTUNG

PROCÉDÉ ET DISPOSITIF D'ÉTALONNAGE DE LA PLANÉITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.07.2018 JP 2018126117**

(43) Date of publication of application:
**08.01.2020 Bulletin 2020/02**

(73) Proprietor: **Panasonic Intellectual Property Management Co., Ltd.**
**Osaka-shi, Osaka 540-6207 (JP)**

(72) Inventors:
• **KUBO, Keishi**
**Osaka, 540-6207 (JP)**
• **FUNABASHI, Takanori**
**Osaka, 540-6207 (JP)**
• **JOUROKU, Takechio**
**Osaka, 540-6207 (JP)**
• **NAGAI, Yasushi**
**Osaka, 540-6207 (JP)**

(74) Representative: **Vigand, Philippe et al**
**Novagraaf International SA**
**Chemin de l'Echo 3**
**1213 Onex - Genève (CH)**

(56) References cited:
**EP-A- 1 219 924**      **JP-A- 2002 054 920**
**JP-A- 2015 175 603**

• **FRANK SIEWERT ET AL.: "Advanced metrology, an essential support for the surface finishing of high performance x-ray optics", SPIE, PO BOX 10 BELLINGHAM WA 98227-0010 USA, vol. 5921, 16 September 2005 (2005-09-16), XP040208837, DOI: 10.1117/12.622747**

**Description**

BACKGROUND

1. Technical Field

The present disclosure relates to a flatness calibration method and a flatness calibration device capable of moving a probe or a measurement object onto a stage in XY-directions, measuring XYZ-coordinates of the probe or the measurement object, and calculating a surface shape by a data process. Specifically, the present disclosure relates to a highly-accurate flatness calibration method and a flatness calibration device capable of reducing a calculation error when measuring a line-type surface shape line by line and synthesizing data measured in a three-dimensional shape by combining pieces of the data in a line shape.

2. Description of the Related Art

In recent years, as an optoelectronics technology has been advanced, an image quality of digital broadcasting has been accurately advanced from 4K to 8K. Therefore, there is a demand for improving an image quality of a camera such as a digital camera and a mobile device using a camera such as a smartphone. As a result, a surface shape of lens used in the camera has an error of 0.03 $\mu$m (30 nm) or less for a design shape, and the lens is increasingly desired to be highly accurate.

A shape measurement device for highly accurately measuring the surface shape of the lens is also desired to perform more accurate measurement. Therefore, a measurement method (see, for example, Japanese Patent No. 3046635) for measuring the surface shape of the lens by using a reference mirror is proposed.

However, a distortion or the like of the reference mirror itself causes a measurement error. Therefore, a measurement method (see, for example, Japanese Patent Unexamined Publication No. 2002-54920) for calibrating a strain of a reference mirror by using a table for calibration is also proposed.

Meanwhile, in a shape measurement device which uses a reference plane in two-dimensional XY-directions, in a case where a mirror is as large as approximately 500 mm, a distortion is included in the mirror used in the reference plane on an order of 50 nm or more. In addition, even in a case where the mirror is as small as less than 500 mm, a distortion is included in the mirror used for the reference plane on an order of 20 to 50 nm and two-dimensional calibration becomes more difficult as compared with one-dimensional measurement of a bar mirror or the like.

In order to perform more accurate measurement, the following measurement method is proposed. By a bar mirror, in two-dimensional XY-directions, one planar portion of the bar mirror is used without using a large reference plane. The bar mirror is sequentially moved at each of positions in an X-direction and positions in a Y-direction within an XY-plane and at each of the positions, the same one plane part of the bar mirror is measured. Measurement data in a line shape in the X-direction and measurement data in a line shape in the Y-direction are obtained.

However, in a case of combining the measurement data in a line shape in the X-direction and the measurement data in a line shape in the Y-direction in an XY-lattice shape and mathematically generating plane data, there is a problem that a twist in a positional relationship occurs and a measurement error occurs.

In order to solve this problem of the twist, there is also a correction method of correcting the twist so that intersections of respective pieces of measurement data of three lines are matched by using the measurement data of three lines obtained by measuring line data in three directions of X, Y, and Z (see, for example, Japanese Patent No. 5494446).

FIG. 11 illustrated a calibration method in the related art described in Japanese Patent No. 5494446.

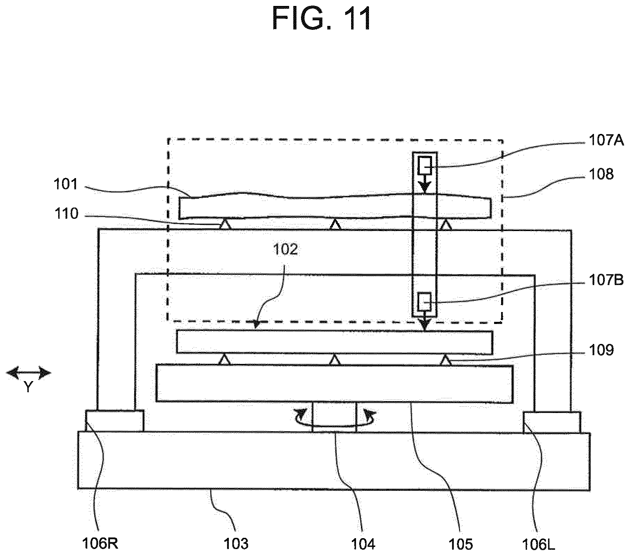

In FIG. 11, a calibration device in the related art is configured to include reference mirror 101, sample 102, platen 103, rotation axis 104, rotation stage 105, one-dimensional stages 106R and 106L, sensors 107A and 107B, one-dimensional measurement unit 108, and supporters 109 and 110.

Sample 102 is scanned in a radial direction of a lateral direction by rotation stage 105, and a surface of sample 102 and a surface of reference mirror 101 are simultaneously measured to obtain a difference between the surface of sample 102 and the surface of reference mirror 101. Accordingly, an error of the stage is removed. Sensors 107A and 107B are simultaneously moved to the left and right to perform measurement in a line shape. That is, by simultaneously moving sensors 107A and 107B to the left and right, a surface shape of sample 102 at a first position can be measured in a line shape based on a reference mirror, without being affected by a straightness error when moving the stage.

After one-dimensional stages 106R and 106L are moved to move a measurement position, and one-dimensional measurement unit 108 is moved to the left and right, the surface shape at a second position is measured in a line shape.

Further, after one-dimensional stages 106R and 106L are moved to move the measurement position, and one-dimensional measurement unit 108 is moved to the left and right, the surface shape at a third position is measured in a line shape.

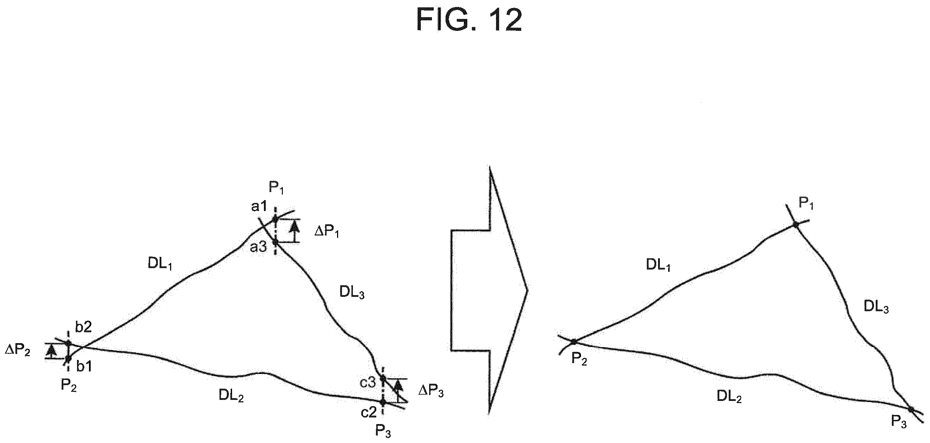

After the measurement, as illustrated in FIG. 12, measurement data of each line is moved so that Z-positions coincide with each other at a position at which XY-positions of three lines coincide with each other. Accordingly, a measurement result without a twist is obtained.

The document Frank Siewert et al., Proceedings of SPIE, vol. 5921, 2005, describes a nanometer optical component measuring machine for the surface finishing of high performance x-ray optics.

The document EP 1219924 describes a positional error evaluation method for mobile device and movement accuracy improving method based on the evaluation result.

The document JP 2015 175603 describes a calibration method for reference mirror surface shape of interferometer.

## SUMMARY

In the flatness calibration method in the related art, a correction amount of a Z-position is determined only at an intersection portion of the lines. Therefore, in a case where fine dust adheres to the intersection portion or drift occurs, which causes a measurement error, and there is a problem that high-accurate correction cannot be performed.

The present disclosure solves the problem in the related art, and it is possible to combine data measured in a straight line shape and to reduce an influence of an error at an intersection portion of the data while correcting a twist. Therefore, it is possible to provide a flatness calibration method and a flatness calibration device capable of performing highly-accurate flatness calibration.

According to an aspect of the present disclosure, there is a flatness calibration method according to claim 1. The flatness calibration method comprises:

moving sequentially one rectangular parallelepiped-shaped bar mirror, which includes a plane having a scheduled measurement range with a size corresponding to a part of a measurement range in XY-directions of a Z-axis reference mirror of a shape measurement device and is formed in a bar shape, at each of positions in an X-direction, and after the bar mirror is rotated by 90° in an XY plane at each of positions in a Y-direction within the XY-plane, sequentially measuring flatness at each of the positions of the plane of the bar mirror in line shapes, and obtaining measurement data in a line shape in the X-direction and measurement data in a line shape in the Y-direction, by a measurement data obtaining device;

moving the measurement data in the line shape in the X-direction and the measurement data in the line shape in the Y-direction in a Z-direction, by a data moving unit so that the measurement data in the line shape in the X-direction and the measurement data in the line shape in the Y-direction approach each other in the Z-direction, at an intersection position of a line in the X-direction including the obtained measurement data in the line shape in the X-direction and a line in the Y-direction including the obtained measurement data in the line shape in the Y-direction;

synthesizing, the measurement data in the line shape in the X-direction and the measurement data in the line shape in the Y-direction, which are moved by the data moving unit, and generating a synthesis plane, by a synthesis plane calculator;

obtaining a twist correction amount in the Z-direction at a lattice point of the measurement data in the line shape in the X-direction and the measurement data in the line shape in the Y-direction when generating the synthesis plane and determining a twist correction factor so as to minimize the obtained twist correction amount, by a twist correction factor determiner;

correcting the twist correction amount of the synthesis plane by using the twist correction factor determined by the twist correction factor determiner, by a corrector; and

calibrating flatness of the measurement range of the Z-axis reference mirror in the XY-directions by using the twist correction amount corrected by the corrector.

According to another aspect of the present disclosure, there is a flatness calibration device according to claim 4.

As described above, according to the aspect of the present disclosure, pieces of the measurement data in line shapes in the respective X-direction and Y-direction obtained by using the bar mirror are combined in a lattice shape and the data at each of lattice points, that is, intersection portions is moved in the Z-direction towards each other, and the twist correction factor is determined so that the twist correction amount, which is a difference in the Z-direction, is minimized. The corrector corrects the twist correction amount of the synthesis plane by using the determined twist correction factor, and flatness of the Z-axis reference mirror within the measurement range in the XY-directions is calibrated by using the twist correction amount of the synthesis plane corrected by using the twist correction factor. With this configuration, it is possible to reduce an influence of an error at an intersection portion of data for correcting a twist when performing highly-accurate flatness calibration, and it is possible to provide a flatness calibration method and a flatness calibration device with high accuracy.

BRIEF DESCRIPTION OF THE DRAWINGS

FIG. 1A is an overall configuration diagram of a shape measurement device according to a shape measurement method for a measurement object in Exemplary Embodiment 1;

FIG. 1B is an overall configuration diagram of the shape measurement device when the shape measurement device performs a calibration operation according to the shape measurement method in Exemplary Embodiment 1;

FIG. 1C is a block diagram of a controller and the like of the shape measurement device according to the shape measurement method in Exemplary Embodiment 1;

FIG. 1D is a flowchart illustrating an operation of the shape measurement method in Exemplary Embodiment 1;

FIG. 2 is a diagram illustrating a probe according to the shape measurement method in Exemplary Embodiment 1;

FIG. 3 is a graph illustrating a relationship between plane accuracy and a position of a bar mirror at a time of the calibration operation of the shape measurement method in Exemplary Embodiment 1;

FIG. 4 is an explanatory view illustrating a measurement status of measurement data at a position in an X-direction and a position in a Y-direction of the bar mirror in Exemplary Embodiment 1;

FIG. 5 is a diagram illustrating an installation status and a position in XY-directions of the bar mirror in Exemplary Embodiment 1;

FIG. 6 is a combination diagram of each of pieces of measurement data in a line shape in XY-directions in Exemplary Embodiment 1;

FIG. 7 is a diagram of a step function in Exemplary Embodiment 1;

FIG. 8 is a diagram illustrating an example of data used for calibration in Exemplary Embodiment 1;

FIG. 9A is an explanatory view illustrating that a synthesis plane with a convex twist as an example of a twist is measured in a diagonal direction of 45 degrees in a distorted state;

FIG. 9B is an explanatory view illustrating that a synthesis plane without a twist is measured in the diagonal direction of 45 degrees in a not-twisted state;

FIG. 9C is an explanatory view illustrating that a synthesis plane with a concave twist as another example of a twist is measured in the diagonal direction of 45 degrees in a distorted state;

FIG. 10 is an explanatory view of installing and measuring a surface distorted from a plane in Exemplary Embodiment 2 in two directions;

FIG. 11 is an overall configuration diagram of a device related to a flatness calibration method in the related art described in Japanese Patent No. 5494446;

FIG. 12 is a diagram illustrating the flatness calibration method in the related art described in Japanese Patent No. 5494446; and

FIG. 13 is an explanatory view illustrating a state in which a Z-axis reference mirror is supported on three places on one circle of a rectangular outer peripheral portion and is installed on an upper stone surface table.

DETAILED DESCRIPTIONS

Hereinafter, exemplary embodiments according to the present disclosure will be described with reference to drawings.

(Exemplary Embodiment 1)

A flatness calibration method and a flatness calibration device according to Exemplary Embodiment 1 obtain a correction table for calibration by using a shape measurement method and device and corrects a measurement result measured by the shape measurement method and device by using the obtained correction table to measure a highly-accurate shape.

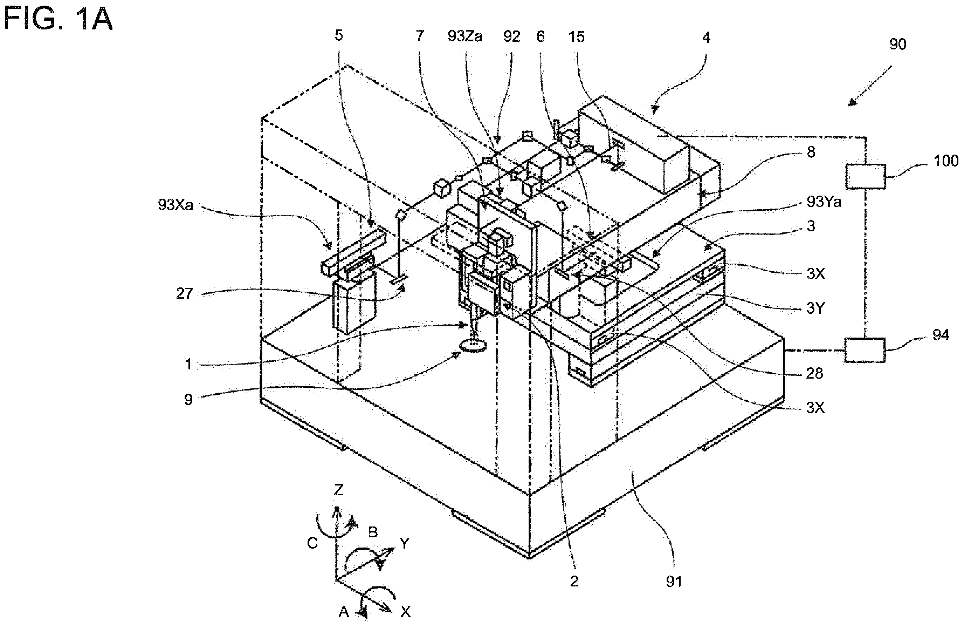

FIG. 1A is an overall configuration diagram of a shape measurement device according to a shape measurement method for a measurement object. Hereinafter, first, the shape measurement method and device will be described, and then the flatness calibration method and the flatness calibration device will be described.

1) Description of Device Configuration of Shape Measurement Device To Be Used

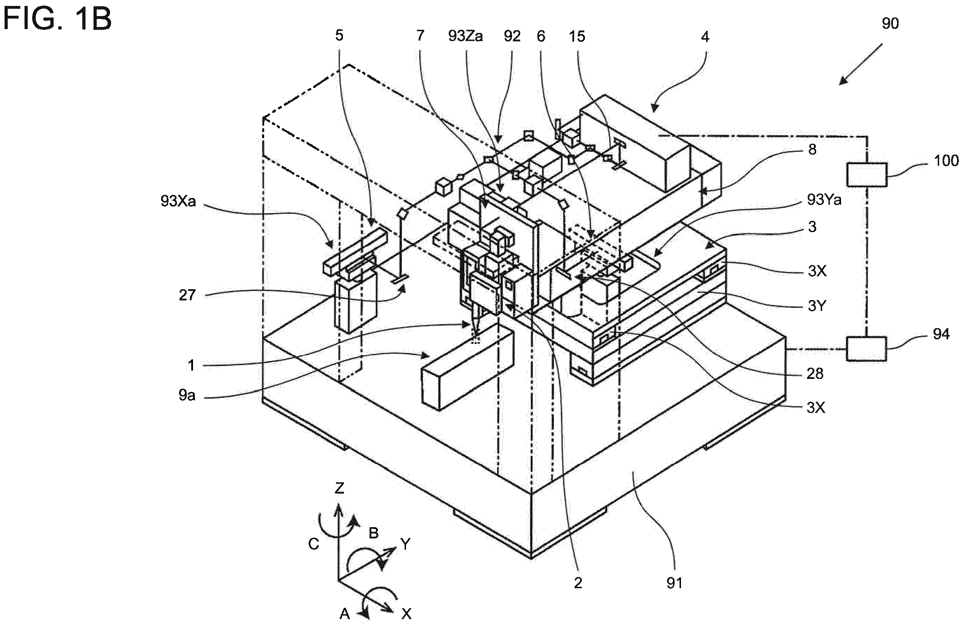

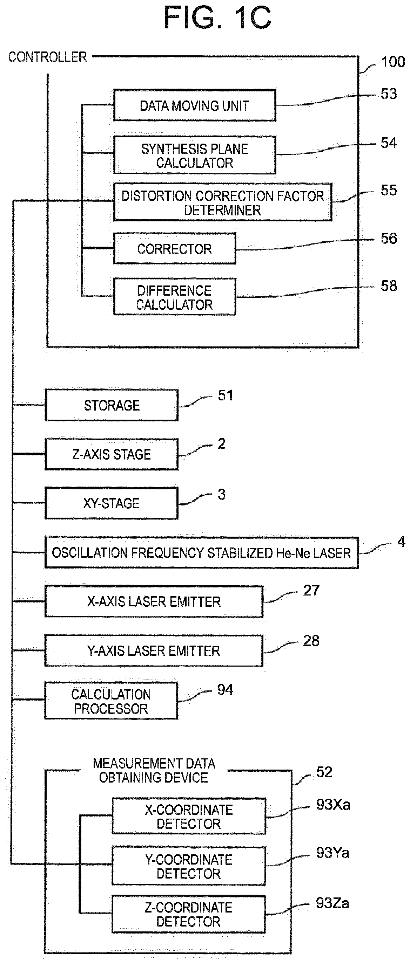

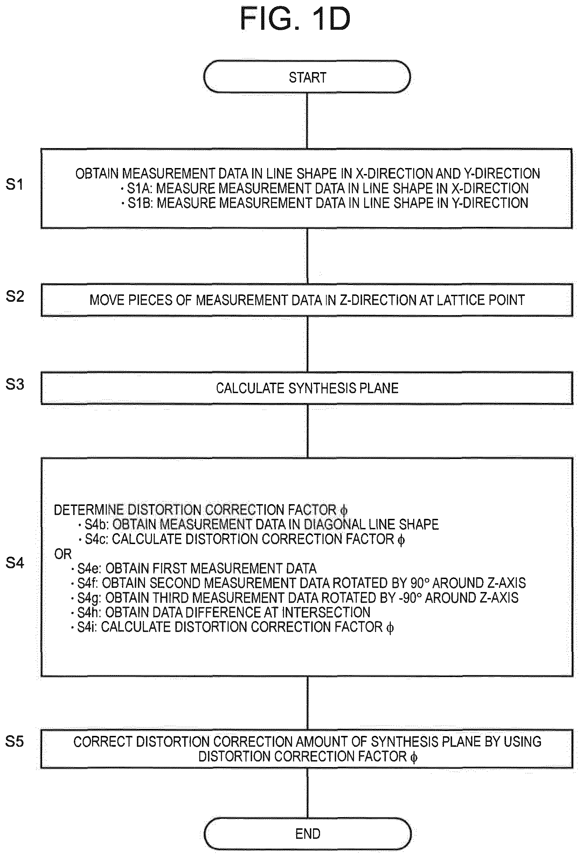

FIG. 1A illustrates an appropriate device configuration for implementing Exemplary Embodiment 1 of the present disclosure. FIG. 1A is a perspective view illustrating a schematic configuration of shape measurement device 90 for implementing a shape measurement method according to Exemplary Embodiment 1 of the present disclosure. FIG. 1B is an overall configuration diagram of shape measurement device 90 when shape measurement device 90 performs a calibration operation according to the shape measurement method. FIG. 1C is a block diagram of a controller and the like of shape measurement device 90 according to the shape measurement method. FIG. 1D is a flowchart illustrating an operation of the shape measurement method.

In FIG. 1A, shape measurement device 90 includes XY-stage 3, upper stone surface table 8, lower stone surface table 91, oscillation frequency stabilized He-Ne laser 4, probe 1, Z-axis stage 2, X-axis reference mirror 5, Y-axis reference mirror 6, Z-axis reference mirror 7, X-axis laser emitter 27, and Y-axis laser emitter 28. Shape measurement device 90 measures a surface shape of measurement object 9, but instead of measurement object 9, as illustrated in FIG. 1B, a surface shape of bar mirror 9a may be measured and a calibration operation of a mirror may be performed as described below. In the following description of a configuration of the device, the configuration will be described as measurement for measurement object 9, but in a calibration operation, measurement object 9 is replaced with bar mirror 9a.

Shape measurement device 90 is configured as follows.

XY-stage 3 is disposed on lower stone surface table 91 on which measurement object 9 is held so as to be movable in an XY-axis direction.

Upper stone surface table 8 is disposed on XY-stage 3, and oscillation frequency stabilized He-Ne laser 4 for measuring a position of the measurement object 9 in XYZ-coordinates is disposed on upper stone surface table 8.

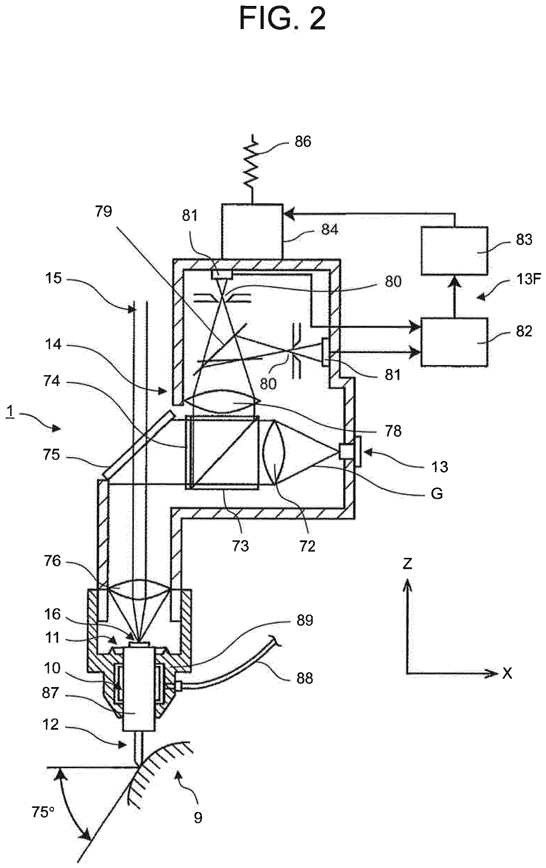

Probe 1 is attached to upper stone surface table 8 via Z-axis stage 2. XY-stage 3 is configured by motor-driven Y-axis stage 3Y disposed on a lower side of XY-stage 3 and motor-driven X-axis stage 3X disposed on an upper side of XY-stage 3. Oscillation frequency stabilized He-Ne laser 4 emits frequency stabilized He-Ne laser beam 15. Emitted frequency stabilized He-Ne laser beam 15 is branched into laser beams in three directions of X, Y, and Z axes via optical system 92 disposed on upper stone surface table 8, and then are respectively reflected to X-axis reference mirror 5, Y-axis reference mirror 6, Z-axis reference mirror 7, and mirror 16 (see FIG. 2) of probe 1. Each of X-axis reference mirror 5, Y-axis reference mirror 6, and Z-axis reference mirror 7 is fixed to lower stone surface table 91, and has high flatness on an order of nanometer.

With this configuration, it is possible to measure XYZ-coordinates of a surface of measurement object 9 with ultra-high accuracy on an order of nanometer by X-coordinate mirror 93X, Y-coordinate mirror 93Y, and Z-coordinate mirror 93Z (not shown) for measuring a position of probe 1 in a Z-direction. Calculation processor 94 is connected to X-coordinate detector 93Xa, Y-coordinate detector 93Ya, and Z-coordinate detector 93Za. Calculation processor 94 performs a calculation process on measurement data input from X-coordinate detector 93Xa, Y-coordinate detector 93Ya, and Z-coordinate detector 93Za, so that three-dimensional coordinate data of the surface of measurement object 9 can be obtained and a shape of the surface can be measured. Here, X-axis laser emitter 27 and Y-axis laser emitter 28 are also connected to calculation processor 94. An example of measurement data obtaining device 52 is configured by X-coordinate detector 93Xa, Y-coordinate detector 93Ya, and Z-coordinate detector 93Za.

Controller 100 controls operations of these units, that is, probe 1 (in other words, probe unit 14 including focus detection laser 13 and the like as illustrated in FIG. 2), Z-axis stage 2, XY-stage 3, oscillation frequency stabilized He-Ne laser 4, X-axis laser emitter 27, Y-axis laser emitter 28, X-coordinate detector 93Xa, Y-coordinate detector 93Ya, Z-coordinate detector 93Za, calculation processor 94, and the like. These units are configured to automatically perform a measurement operation in shape measurement device 90 or a calibration operation to be described below.

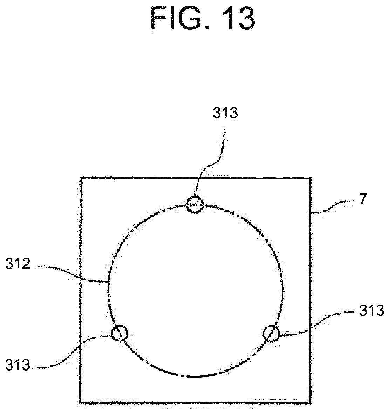

Here, for example, Z-axis reference mirror 7 is supported on points 313 of three places on one circle 312 of a rectangular outer peripheral portion and is installed on upper stone surface table 8 as illustrated in FIG. 13. That is, points 313 of the three places support Z-axis reference mirror 7 so as not to be deformed by fixing force in a bending direction at a time of installation. Meanwhile, even with the supporting method of the three outer peripheral places, Z-axis reference mirror 7 having a diameter of approximately 500 mm is supported in a state in which a distortion of approximately 100 nm occurs due to gravity.

FIG. 2 illustrates a configuration of probe 1 of the shape measurement device which executes the shape measurement method according to Exemplary Embodiment 1 of the present disclosure.

In FIG. 2, stylus 12 of probe 1 is supported by micro air slider 10, and slide portion 87 of a movable portion of micro air slider 10 is suspended and supported by cylinder-shaped guide 89 with plate-shaped micro spring 11. Micro spring 11 is deflected by weak atomic force acting on measurement object 9 and a tip of stylus 12. The deflection of micro spring 11 is measured by focus detector 13F using laser beam G of focus detection laser 13 irradiated on mirror 16 held by micro spring 11 at an upper end of micro air slider 10. Entire probe unit 14 is fed back in the Z-direction by Z-axis stage 2 so that the atomic force becomes constant. At the same time displacement in the Z-direction, that is, a position in the Z-direction is measured by Z-coordinate detector 93Za such as a laser length measuring device or the like by measuring frequency stabilized He-Ne laser beam 15 being irradiated and reflected on mirror 16. In this state, entire probe unit 14 is scanned in XY-directions to measure the shape of the surface of measurement object 9. According to this configuration, a weight of a movable portion of micro air slider 10, which is a movable portion to which stylus 12 is attached, can be reduced. With this configuration, it is possible to highly-accurately measure the surface shape of measurement object 9 with nanometer accuracy up to a high-inclined plane of maximum 75 degrees. Focus detector 13F is configured to include error signal generator 82 and servo circuit 83 to be described below.

In probe 1 of such a configuration movable in the Z-direction, laser beam G emitted from focus detection laser 13 passes through collimator lens 72, polarization beam splitter 73, and $\lambda/4$ wave plate 74, is reflected by dichroic mirror 75, and is condensed on mirror 16 attached to an upper end surface of micro air slider 10 by object lens 76. Reflected light of laser beam G returned from mirror 16 to object lens 76 is totally reflected by dichroic mirror 75 and polarization beam splitter 73, is condensed by lens 78 and separated into two beams by half mirror 79. Each of the beams passes through each of two pinholes 80 and two light detectors 81 respectively receive the two beams. Outputs of two light detectors 81 become focus error signals by error signal generator 82. Servo circuit 83 controls linear motor 84 so that the focus error signals become zeros. A weight of a Z moving unit including probe 1 is supported by spiral spring 86. Probe 1 includes cylinder-shaped slide portion 87. Micro air slider 10 can move an inner wall of guide 89 having a blowout hole of air supplied from air supplier 88 in the Z-direction as micro air slider 10. Mirror 16 is fixed to an upper portion of slide portion 87. A weight of a movable portion having slide portion 87, probe 1, and mirror 16 is supported by micro spring 11.

Stylus 12 is scanned with a weak measurement pressure on the surface of measurement object 9 and moves up and down along the surface shape. Since a focus servo operates so as to move the entire probe up and down when stylus 12 moves up and down, object lens 76 always focuses on mirror 16.

Here, XY-positions of probe 1 are configured so that a distance between X-axis interferometer and Y-axis interferometer is constant and does not change. In this manner, the distance is maintained to be constant, so that X-coordinate detector 93Xa and Y-coordinate detector 93Ya can highly-accurately and respectively measure distances from a center of the probe to X-axis reference mirror 5 and Y-axis reference mirror 6 by the laser beams respectively emitted in XY-directions.

By scanning probe 1 in the XY-directions, on a surface of the lens which is measurement object 9, shape measurement device 90 causes X-coordinate detector 93Xa, Y-coordinate detector 93Ya, and Z-coordinate detector 93Za to obtain an XYZ-coordinates data string on the lens. Calculation processor 94 arithmetically processes a string of Z-coordinate data at the XY-coordinates positions measured by probe 1 to measure the shape of the lens.

<Calibration of Bar Mirror Data Distortion>

Here, it is considered a case in which a distortion of, for example, approximately 100 nm of Z-axis reference mirror 7 is calibrated by using bar mirror 9a in a rectangular parallelepiped shape.

That is, when using Z-axis reference mirror 7, accuracy of the mirror is originally desired to be high, but as measurement accuracy of measurement object 9 is increased, measurement data including a distortion as it is of plane accuracy of Z-axis reference mirror 7 is obtained.

Therefore, the present inventor considers that the distortion of plane accuracy of Z-axis reference mirror 7 is removed.

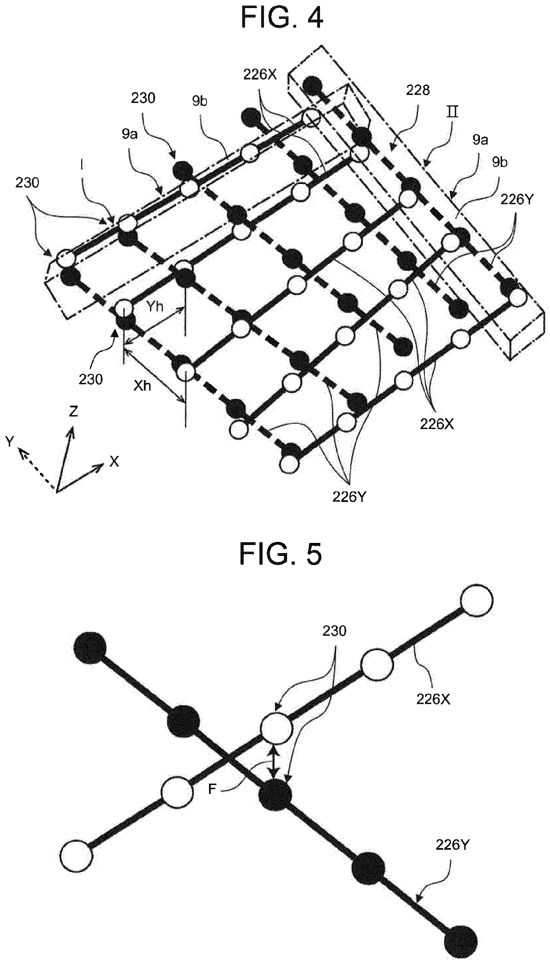

Therefore, the present inventor considers the followings. At a position at which measurement object 9 is measured, by using bar mirror 9a (see FIG.1B) having plane accuracy higher than Z-axis reference mirror 7 and measuring one plane 9b (see FIG. 4) having bar mirror 9a, a distortion of plane accuracy of Z-axis reference mirror 7 is obtained. When removing the obtained distortion from measurement data, it is possible to obtain high measurement accuracy.

Specifically, first, shape measurement device 90 measures bar mirror 9a for calibration.

Next, based on the measurement result, the plane accuracy of Z-axis reference mirror 7 is corrected and temporary correction table P1 is generated.

Here, correction of the flatness of Z-axis reference mirror 7 cannot be performed by one calculation. Temporary correction table P1 is a temporary correction table at an intermediate stage, which is generated when the calculation is repeated a plurality of times.

For this calibration, bar mirror 9a having flatness accuracy higher than accuracy of Z-axis reference mirror 7 is used. As pricing at National Metrology Institute of Japan, traceable calibration data is obtained and more reliable calibration is performed.

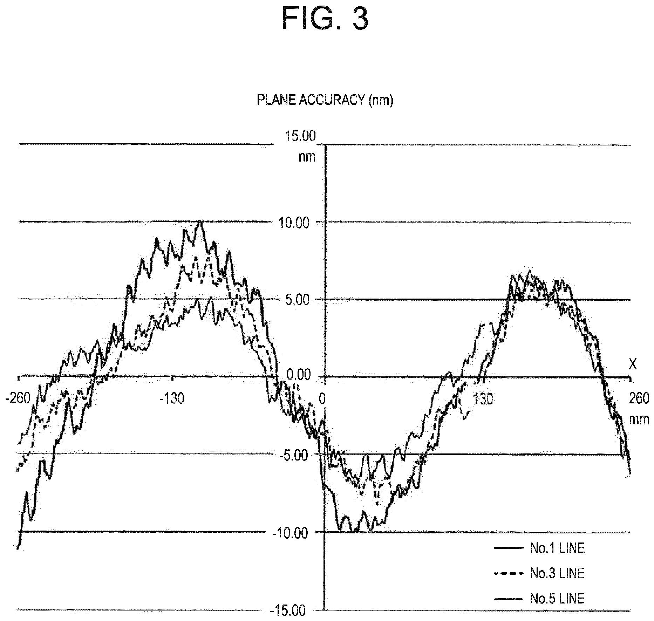

FIG. 3 illustrates a data example of bar mirror 9a used for calibration. The vertical axis in FIG. 3 is a Z-coordinate value representing plane accuracy of bar mirror 9a, and the horizontal axis is a position of bar mirror 9a in the X-direction when bar mirror 9a is disposed, for example, in the X-direction. For example, when bar mirror 9a is disposed in the Y-direction, the horizontal axis is the position of bar mirror 9a in the Y-direction. Bar mirror 9a illustrated in FIG. 3 is processed with flatness of $\pm 15$ nm (that is, plane accuracy) in an area having a length of 520 mm ($\pm 260$ mm) in bar mirror 9a, and a flatness value is calibrated with traceability. This data is stored as data for calibration in storage 51 of controller 100, all pieces of measurement data in a line shape, that is, in a straight line shape is corrected by using the data for calibration, and the flatness is subsequently corrected.

That is, as illustrated in FIG. 1D, the following steps are performed in order in the flatness calibration method according to the exemplary embodiment.

(Step S1) First, measurement data obtaining device 52 obtains measurement data 226X in a line shape in the X-direction and measurement data 226Y in a line shape in the Y-direction (see FIG. 4).

(Step S2) Next, data moving unit 53 moves measurement data 226X and 226Y in the Z-direction so that lattice points (that is, intersection position) 230 of measurement data 226X and 226Y approach each other in the Z-direction (see FIG. 5).

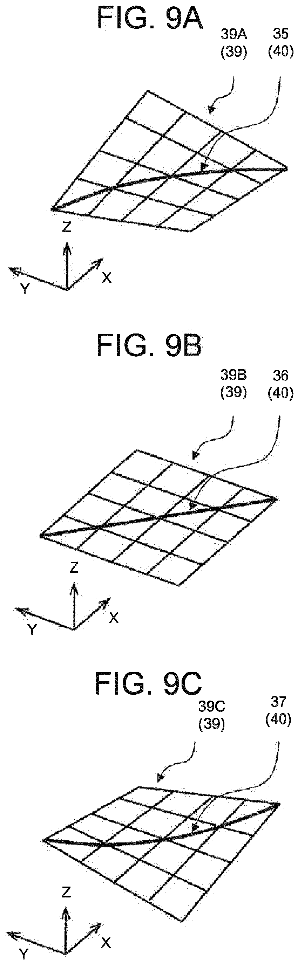

(Step S3) Next, synthesis plane calculator 54 generates synthesis planes 39A to 39C (see FIGs. 9A to 9C).

(Step S4) Next, a difference in the Z-direction between lattice points 230, that is, twist correction amount dZs is obtained, and twist correction factor determiner 55 determines twist correction factor $\varphi$ so that obtained twist correction amount dZs is minimum.

(Step S5) Next, corrector 56 corrects twist correction amount dZs of synthesis plane 39 (see FIGs. 9A to 9C) by using twist correction factor $\varphi$ determined by twist correction factor determiner 55, and flatness of Z-axis reference mirror 7 in the XY-directions within a measurement range is calibrated by using twist correction amount dZs of synthesis plane 39 corrected by using twist correction factor $\varphi$.

In this manner, when calibrating a distortion of Z-axis reference mirror 7 by using a correction table for calibration so as to use the calibrated flatness, pieces of data measured in a straight line shape can be combined and the twist can be corrected while reducing an influence of an error at an intersection portion of the pieces of data. Therefore, it is possible to highly-accurately perform flatness calibration. As a result, by using the calibration information, it is possible to highly-accurately measure the surface of measurement object 9.

<Step S1: Obtain Measurement Data in Line shape in X-direction and Y-direction>

FIG. 4 is an explanatory view illustrating a position of bar mirror 9a and measurement data in the flatness calibration method according to Exemplary Embodiment 1. Only one same bar mirror 9a is used to calibrate Z-reference mirror 7 distortion. So the as illustrated in FIG. 1B, instead of measurement object 9, bar mirror 9a is directly mounted on lower stone surface table 91 or indirectly mounted via a jig.

Specifically, one bar mirror 9a is disposed at a position in the X-direction as indicated by I of a dashed-dotted line in FIG. 4, and a shape of one plane 9b of bar mirror 9a is measured and measurement data 226X in a line shape in the X-direction is obtained. Thereafter, a position of bar mirror 9a is moved in the Y-direction by predetermined interval Xh and is disposed. The shape of plane 9b of bar mirror 9a is measured again and measurement data 226X in a line shape in the X-direction is obtained. After repeating this process a predetermined number of times, same one bar mirror 9a is disposed at a position in the Y-direction as indicated by II of a dashed-dotted line in FIG. 4, and the shape of plane 9b of bar mirror 9a is measured and measurement data 226Y in a line shape in the Y-direction is obtained. Thereafter, a position of bar mirror 9a is moved in the X-direction by predetermined interval Yh and is disposed. The shape of plane 9b of bar mirror 9a is measured again and measurement data 226Y in a line shape in the Y-direction is obtained. This process is repeated a predetermined number of times.

In this manner, in FIG. 4, measurement data 226X in a line shape in the X-direction obtained by measuring the shape of plane 9b when bar mirror 9a is placed at a position in the X-direction is indicated by a solid line. In addition, in FIG. 4, measurement data 226Y in a line shape in the Y-direction obtained by measuring the shape of plane 9b when bar mirror 9a is placed at a position in the Y-direction is indicated by a dotted line.

Measurement data 226X and 226Y are a collection of a large number of pieces of coordinate data aligned in a straight line shape. Measurement data 228 crossed each other and formed in a lattice shape is configured to include measurement data 226X in a line shape in the X-direction and measurement data 226Y in a line shape in the Y-direction.

Here, as bar mirror 9a, regarding at least one plane 9b of bar-shaped bar mirror 9a, plane 9b having already known shape data and having plane accuracy higher than flatness of Z-axis reference mirror 7 is used. By measuring the shape in a scheduled measurement range having a size corresponding to a part in a measurement range of Z-axis reference mirror 7 in the XY-directions in one plane 9b of such bar mirror 9a, it is possible to measure the distortion of Z-axis reference mirror 7 disposed in shape measurement device 90 as described below. The measurement range of Z-axis reference mirror 7 in the XY-directions is, for example, a rectangular area, and is sufficiently larger than an area of one rectangular plane 9b of bar mirror 9a, for example. The measurement range is large such that bar mirrors 9a can be sequentially moved in parallel and aligned in the X-direction, and can be sequentially moved in parallel and aligned in the Y-direction.

Specifically, in the scheduled measurement range corresponding to the measurement range of Z-axis reference mirror 7 in the XY-directions, sequentially, a position of one bar mirror 9a is moved in the X-direction and in the Y-direction by each of predetermined intervals Xh and Yh, one bar mirror 9a is disposed at a plurality of positions in the X-direction and a plurality of positions in the Y-direction, and measurement data in each of the X-direction and the Y-direction is obtained in a line shape. As a result, measurement data 228 in a lattice shape obtained by combining measurement data in a line shape in the X-direction and measurement data in a line shape in the Y-direction can be included in the scheduled measurement range. In this manner, it is possible to obtain measurement data in the scheduled measurement range corresponding to the measurement range of Z-axis reference mirror 7 in the XY-directions, to obtain each of distortions of Z-axis reference mirror 7 by referring to already known data, to obtain calibration data required for calibration, for example, a temporary correction table, and to store the obtained data for calibration in storage 51 as the temporary correction table.

Here, each of measurement data 226X in the X-direction and measurement data 226Y in the Y-direction is data measured and obtained in a line shape. For example, it is assumed that a shift pitch in the Y-direction of measurement data 226X in the X-direction, in a line shape in the X-direction, is Xh. It is assumed that a shift pitch in the X-direction of measurement data 226Y in the Y-direction, in a line shape in the Y-direction, is Yh. For example, it is assumed that an acquisition pitch along one line of measurement data 226X in the X-direction, in the X-direction, is set to Xa smaller than shift pitch Xh. It is assumed that an acquisition pitch along one line of measurement data 226Y in the Y-direction, in the Y-direction, is set to Ya smaller than shift pitch Yh. In this manner, the measurement data is obtained. The reason is that since a measurement time in a scanning direction takes long in the shape measurement device for measuring stylus 12 by scanning stylus 12, acquisition pitch Ya of data is set to be smaller than shift pitch Yh in a computer.

Acquisition pitch Xa in the X-direction and acquisition pitch Ya in the Y-direction can be determined in advance in relation to a calculation processing time and accuracy. For example, if the pitch decreases, a data amount increases and the processing time increases, but the accuracy increases. On the other hand, if the pitch increases, the data amount decreases and the processing time decreases, but the accuracy decreases. In general, the shape measurement device has a limit in the measurement points to be acquired. Although a smaller pitch has better accuracy, a desired number of points may be determined in consideration of the measurement time. For example, in a case of measuring an area of 400 mm × 400 mm, a shift pitch of 10 mm and acquisition pitches Xa and Ya can be measured at approximately 0.1 mm.

A detailed procedure in step S1 for obtaining measurement data will be described.

First, as step S1A, in order not to deform Z-axis reference mirror 7, measurement data is measured in a line shape in the X-direction while a jig holding Z-axis reference mirror 7 is sequentially shifted by a predetermined amount in the Y-direction, and the measured data is measured in a line shape in the X-direction, and the measured data stored in storage 51.

In the same manner, as step S1B, measurement data is measured in a line shape in the Y-direction while the jig holding Z-axis reference mirror 7 is sequentially shifted by a predetermined amount in the X-direction, and the measured data is stored in storage 51.

Here, upper stone surface table 8 is processed with micrometer accuracy. In a case where the jig is installed on upper stone surface table 8, parallels (inclinations) and heights of the Z-direction of an installation position of Z-axis reference mirror 7, an A-direction (a rotational position around the X-axis), and a B-direction (a rotational position around the Y-axis) are not reproducible in accuracy of nanometer and do not coincide with each other. Therefore, the jig is installed and the measurement data is measured. The measurement data measured in a line shape is stored in storage 51 in a state in which a Z-position and an angle attitude of the measurement data are slightly shifted on a line to be measured according to flatness and an attitude of upper stone surface table 8 and the installed jig.

<Position Shift between Z-direction, A-direction, and B-direction due to Installation Accuracy>

FIG. 5 illustrates a plot example of measurement data 226X and 226Y in line shapes in the X-direction and Y-direction immediately after measurement. Measurement data 226X and 226Y in line shapes is measurement data of same bar mirror 9a formed by a straight line processed on an order of nanometer accuracy (1 nm = 1 × 10$^{-9}$ m). When bar mirror 9a is installed on lower stone surface table 91 to be measured, lower stone surface table 91 is processed on an order of micrometer accuracy (1 μm = 1 × 10$^{-6}$ m). Meanwhile, bar mirror 9a receives an influence of finishing accuracy of lower stone surface table 91 on which bar mirror 9a is installed, and installation accuracy of bar mirror 9a becomes accuracy on a micro-order. Accordingly, based on a lower stone surface table and in a unit of nanometer, in installed bar mirror 9a, as illustrated in FIG. 4, each of measurement data 226X and 226Y in line shapes has different inclination or height in the Z-direction even if XY-positions are aligned at each point of lattice points 230 of measurement data 226X and 226Y in line shapes, and has an uneven distortion of 3 to 5 μm, for example.

<Steps S2 and S3: Data Movement and Synthesis Plane Generation>

Hereinafter, a method of generating two-dimensional synthesis plane data in the XY-directions by synthesis plane calculator 54 will be described. In the method, when combining measurement data 226X, in a line shape in the X-direction, and measurement data 226Y, in a line shape in the Y-direction, in a lattice shape, positions in the Z-direction at lattice point 230, at which measurement data 226X in a line shape in the X-direction and measurement data 226Y in a line shape in the Y-direction cross and match in a lattice shape, are aligned with each other, so that the two-dimensional synthesis plane data is generated.

In previous step S1B, each of measurement data 226X and 226Y in line shapes is virtually handled as a bar having a distortion on an order of nanometer in the Z-direction in one virtual measurement line. Storage 51 stores absolute coordinates in the XY-directions of X and Y positions of each of lattice points 230 with respect to shape measurement device 90 on respective measurement lines.

An error in the XY-directions in mounting accuracy of parallelism of bar mirror 9a with respect to lower stone surface table 91 is sufficiently small and negligible. For example, considering the error in the XY-directions as the followings, when bar mirror 9a is attached to lower stone surface table 91 with parallelism accuracy of 10 $\mu$m or less in the Z-direction with respect to bar mirror 9a having a length of 500 mm, by using a scientific calculator, a measurement error in the XY-directions due to inclination is {1 - cos (10 $\mu$m / 500 mm)} * 500 mm = 3.05 $\times$ 10$^{-11}$ mm = 3.05 $\times$ 10$^{-5}$ nm $\cong$ 0. Since it is possible to ignore an influence of position alignment in the XY-directions as being equal to or less than sub-nano, it is not necessary to consider the mounting error of bar mirror 9a in the Z-direction equal to or less than 10 $\mu$m.

Regarding measurement data 226X and 226Y in line shapes in the X-direction and Y-direction, at each of lattice points 230, at which X-coordinates and Y-coordinates of lattice point 230 coincide with each other, measurement data 226X or 226Y in line shapes in the X-direction or the Y-direction corresponding to the bar is moved by data moving unit 53 so as to approach each other in the Z-direction and measurement data 226X and 226Y in line shapes are combined by synthesis plane calculator 54. This calculation model will be described below.

Assuming that a bar is in a state of weightlessness and floating in a vacuum space free of air or the like, the bar is stationary if no external force is applied. Meanwhile, when an external force or the like is applied to the bar in the Z-direction for a certain period, and the bar moves at a constant speed by this force, there is no friction, so that the bar continues to move at the same speed in the same direction without being braked. This is a model of virtual Newtonian mechanics acting on a bar.

Here, in order to make each of the lattice points of the bar coincide in the Z-direction, it is assumed that data moving unit 53 includes a model of adding attractive force F proportional to a distance apart in the Z-direction at a point at which XY-positions of the measurement data in the X-direction and the measurement data in the Y-direction coincide with each other.

It is assumed that lattice points 230 of the measurement data in the X-direction and the measurement data in the Y-direction, which are bars, are likely to come close to each other by attractive force F. FIG. 5 illustrates a state in which attractive force F acts and measurement data in the X-direction and measurement data in the Y-direction approach each other, that is, lattice points 230 of bars approach each other.

Meanwhile, in a zero gravity space, when there is no frictional force, the bar which is started to move by attractive force F continues to move infinitely. Therefore, a model in which with respect to movement in the Z-direction, a virtual damping force proportional to the movement speed in the Z-direction is assumed by data moving unit 53 and the calculation is stable is obtained.

With this model, as attractive force F acts between lattice points 230 and the lattice points 230 coincide with each other, attractive force F acting between lattice points 230 at all of lattice points 230 is calculated by data moving unit 53, virtual mass M of each of lattice points 230 is assumed to be 1, and the calculated force is divided by virtual mass M, by data moving unit 53. By calculating in this manner, data moving unit 53 calculates an acceleration from the force, integrates the acceleration to calculate a velocity, and further integrates the velocity. Accordingly, a position at which lattice points 230 coincides with each other in the Z-direction is calculated and data moving unit 53 moves each of lattice points 230 in the Z-direction at the position. A predetermined threshold at which a movement amount is sufficiently smaller than a distance before calculation between lattice points 230 is set in advance. In a case where data moving unit 53 determines that a movement distance between lattice points 230 becomes smaller than the predetermined threshold value, data moving unit 53 determines that the alignment of lattice points 230 is completed, and the calculation of data moving unit 53 is completed.

<Occurrence of Twist at Time of Combining in Synthesis Plane Calculator 54>

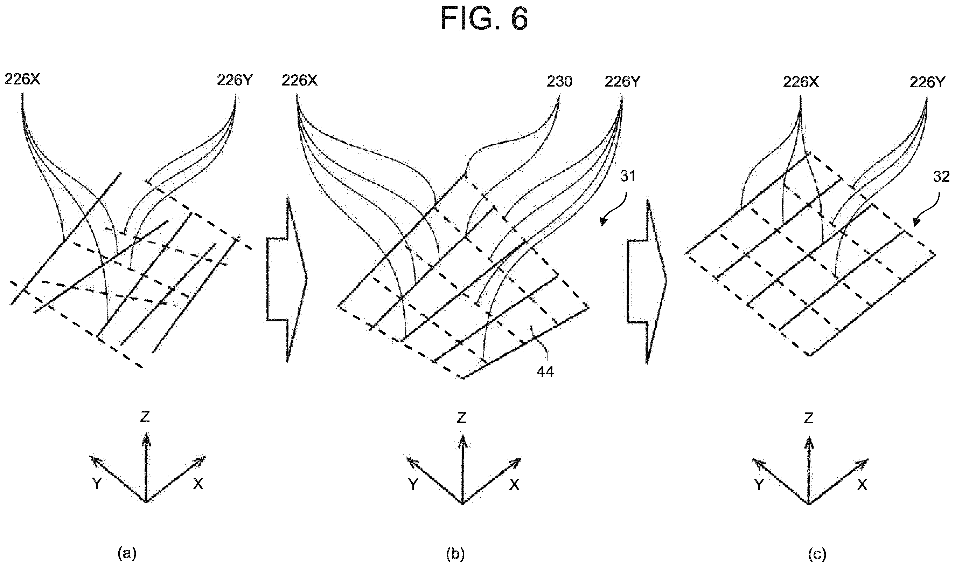

(a) to (c) of FIG. 6 illustrate a change status when matching and combining measurement data 226X and 226Y in a line shape in the X-direction and Y-direction at each of lattice points 230 by data moving unit 53, and generating a synthesis plane in synthesis plane calculator 54. In FIG. 6, the dotted line indicates measurement data 226Y in a line shape in the Y-direction, and the solid line indicates measurement data 226X in a line shape in the X-direction.

(a) of FIG. 6 is a diagram in which measurement data 226X and 226Y in line shapes in the X-direction and Y-direction immediately after measurement by measurement data obtaining device 52 are collectively illustrated.

In order to calculate measurement data 226X and 226Y in (a) of FIG. 6 according to the procedure in data moving unit 53, (b) of FIG. 6 illustrates a calculation example in which data moving unit 53 moves the data so that positions of lattice points 230 of measurement data 226X in the X-direction and measurement data 226Y in the Y-direction coincide with each other, and synthesis plane calculator 54 calculates a synthesis plane. As the positions of each of lattice points 230 coincide with each other in the calculation, data moving unit 53 moves Z-coordinates at lattice point 230 of measurement data 226X in the X-direction and measurement data 226Y in the Y-direction and synthesis plane calculator 54 calculates a synthesis plane, as illustrated in (b) of FIG. 6, so synthesis plane 44 has a state in which twist 31 occurs. The reason is that even if synthesis plane calculator 54 combines ideal straight measurement lines of each of measurement data 226X in the X-direction and measurement data 226Y in the Y-direction in a lattice shape in the XY-direction, a position of twist 31 cannot be regulated. Therefore, when combining the straight lines in the X-direction and Y-direction indicating each of measurement data 226X in the X-direction and measurement data 226Y in the Y-direction in a lattice shape and synthesis plane calculator 54 calculates and combines a synthesis plane, data moving unit 53 can perform the integral calculation of combination even in a state in which the combined plane is in synthesis plane 44 having twist 31 as illustrated in (b) of FIG. 6 or even in a state in which the plane in (c) of FIG. 6 is ideal plane 32 in which twist 31 is removed.

<Step S3: Storage of Synthesis Plane Data Calculated by Synthesis Plane Calculator 54 and Preparation of Correction Table>

Data of the combined synthesis plane in (b) of FIG. 6 is set as temporary correction data of Z-axis reference mirror 7. In a state of including twist 31, a table is stored in storage 51 as temporary correction table P1.
In order to calibrate Z-axis reference mirror 7, in the flatness calibration method of shape measurement device 90, it is necessary to calculate a correction amount of a Z-position with respect to a predetermined XY-positions of Z-axis reference mirror 7 within a measurement range in the XY-directions, from the measurement data as temporary correction table P1. Here, by using temporary correction table P1, it is necessary to correct a distortion of Z-axis reference mirror 7 in the Z-direction with respect to lattice point 230 by the correction amount at an equal interval pitch in each of the X-direction and Y-direction, and it is necessary to obtain the correction amount of Z-axis reference mirror 7 at the predetermined XY-positions.

<Step S3: Function of Calculation of Correction Amount in Z-direction (Z-position Correction Amount) at Predetermined XY-positions by Synthesis Plane Calculator 54 and Example>

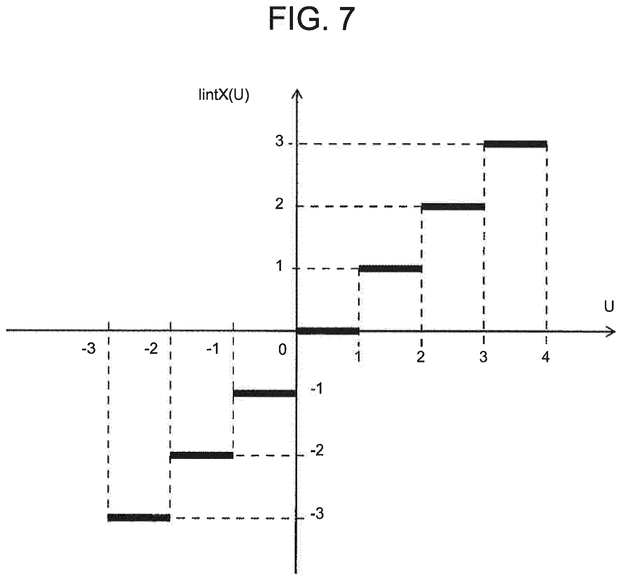

By using the temporary correction table held in a lattice shape, in order to calculate a correction amount corresponding to predetermined XY-position 34, synthesis plane calculator 54 calculates correction amount dZs of a Z-position at XY-position 34 by a correction amount of a Z-position at each of a positions of four lattice points 230 surrounding one XY-position 34 (meanwhile, coordinates are represented by (X, Y)), that is, a position of coordinates (X0, Y0), a position of coordinates (X0, Y1), a position of coordinates (X1, Y0), and a position of coordinates (X1, Y1).
The temporary correction table is configured with equal interval pitches in an XY-lattice shape, and correction amount dZs of the Z-position of Z-axis reference mirror 7 with respect to predetermined XY-position 34 is calculated by synthesis plane calculator 54 by using a linear interpolation function of a straight line.
In order to refer to temporary correction table P1 of predetermined XY-position 34 by synthesis plane calculator 54, if all of temporary correction tables P1 are searched in order by synthesis plane calculator 54, a calculation time becomes long. Therefore, in order to efficiently refer to temporary correction table P1 by synthesis plane calculator 54, synthesis plane calculator 54 calculates an index for referring to temporary correction table PI, by using shift pitches Xh and Yh in the X-direction and Y-direction which are interval pitches of respective pieces of measurement data in a line shape of reference table RT.
Therefore, function IintX(U) is defined. For example, a temporary correction table is generated in an XY-lattice shape in a measurement range of XY (for example, a total range of a circular range of 500 mm in diameter and a square range of 400 mm on one side). In order to rapidly refer to the temporary correction table in a lattice shape, it is possible to execute high-speed reference by using an integerization command (int). Here, in general integerization function int, outputs from 0 to -1 are 0. Since an error occurs in a reference position when using general integerization function int, new function IintX(U) is defined. As compared with general integerization function int, newly defined function IintX(U) has an only difference in that outputs from -1 to 0 are -1. By using newly defined function IintX(U), synthesis plane calculator 54 performs efficient data reference on temporary correction table P1. Function IintX(U) is a step function which outputs a maximum integer value not exceeding a real number U, corresponding to a change of U illustrated in FIG. 7. By using function IintX(U), synthesis plane calculator 54 refers to temporary correction table P1 by XY-position 34, so that a reference time of temporary correction table P1 at the time of calculation is accelerated.
Here, the XY-position is represented by ij of an integer, and is an XY-position addressed by an integer. Here, i and j are integers, and are labels indicating the number of respective measurement positions in the X-direction and Y-direction from an origin, and i and j are referred to as indices. For example, assuming that an X-position is Xd, a Y-position is Yd, and a latticed X-direction pitch and Y-direction pitch are Xp and Yp,

$$Xd = i * Xp$$

$$Yd = j * Yp,$$

and an XY-position in a lattice can be represented by ij.

In addition, from XY-position 34, indices of four positions 33 of peripheral reference points are defined as the followings.

$$i = Iint \{(X \cdot Xh / 2) / Xh\}$$

$$j = Iint \{(Y \cdot Yh / 2) / Yh\}$$

$$i1 = i + 1$$

$$j1 = j + 1$$

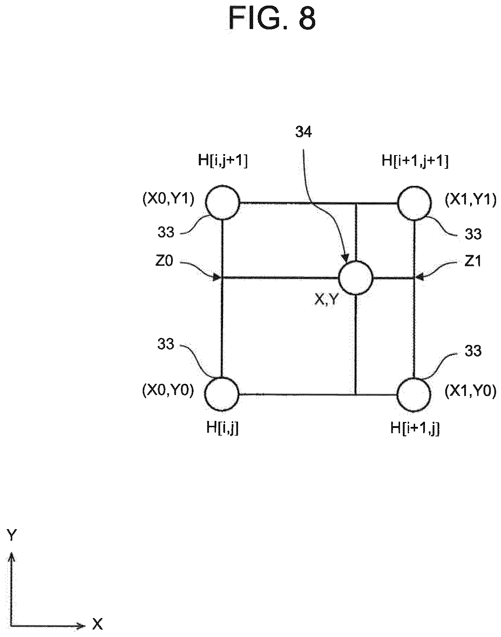

By using these indices, synthesis plane calculator 54 calculates reference data at each of four positions 33 around XY-position 34 in FIG. 8, that is, a position of coordinates (X0, Y0), a position of coordinates (X0, Y1), a position of coordinates (X1, Y0), and a position of coordinates (X1, Y1). That is, a correction value in the Z-direction used for calibration is stored in storage 51 as a temporary correction table of H[i, j], and if i and j are determined and the correction value is read with i and j, it is possible to obtain a correction amount in the Z-direction at a lattice position of i and j. An effective range of XY including XY-position 34 is within a range in which the plane is defined. H [i, j] is a correction amount in the Z-direction at the lattice position of i and j. In addition, a correction amount in the Z-direction obtained by shifting the lattice position by +1 in the X-direction is H[i + 1, j].

Specifically, each of indices of X values and indices of Y values of coordinates of positions 33 of the peripheral four points is as the following.

$$X0 = i * Xh,$$

$$Y0 = j * Yh,$$

$$X1 = (i + 1) * Xh,$$

and

$$Y1 = (j + 1) * Yh$$

Based on this, as illustrated in FIG. 8,
A correction value in the Z-direction at a position of coordinates (X0, Y0) is H [i, j],
A correction value in the Z-direction at a position of coordinates (X0, Y1) is H [i, j + 1],
A correction value in the Z-direction at a position of coordinates (X1, Y0) is H [i + 1, j], and
A correction value in the Z-direction at a position of coordinates (X1, Y1) is H [i + 1, j + 1].

Based on these, synthesis plane calculator 54 efficiently refers to temporary correction table P1 and calculates reference data. Synthesis plane calculator 54 calculates correction amount dZs of the Z-position at XY-position 34 by performing linear interpolation using values of the reference data at positions 33 of the four peripheral points calculated by synthesis plane calculator 54.

Specifically, assuming that a line on a left (X-) is Z0, a line on a right (X +) is Z1, and a correction amount of a temporary Z-position at predetermined XY-position 34 is Zh,

$$Z0 = (H[i + 1, j] - H[i, j]) * (X - X0) / (X1 - X0) + H[i, j],$$

$$Z1 = (H[i + 1, j + 1] - H[i, j + 1]) * (X - X0) / (X1 - X0) + H[i, j + 1],$$

and

$$Zh = (Z1 - Z0) * (Y - Y0) / (Y1 - Y0) + Z0.$$

Synthesis plane calculator 54 calculates correction amount Zh of the Z-position at XY-position 34 by linear interpolation from positions 33 of the four peripheral points. A correction amounts in the temporary correction table at four lattice point positions can be represented as H[i, j], H[i, j + 1], H[i + 1, j], and H[i + 1, j + 1]. Z0 is a correction amount at a Y-position on H[i, j] and H[i, j + 1], and Z1 is a correction amount at a Y-position on H[i + 1, j] and H[i + 1, j + 1], A Z correction amount at a predetermined XY-position is dZ1 (X, Y), and is obtained from the correction amounts in the Z-direction of the peripheral four points (four lattice points).

Accordingly, assuming that correction amount Zh of the temporary Z-position at predetermined XY-position 34 is calculated by synthesis plane calculator 54, and a temporary correction amount is dZ1(X, Y), as dZ1(X, Y) = Zh, synthesis plane calculator 54 obtains temporary correction amount dZ1(X, Y).

By using this function, after synthesis plane calculator 54 calculates correction amount Zh of the Z-position with respect to predetermined XY-position 34 within the effective range of XY, synthesis plane calculator 54 obtains a surface shape of synthesis plane 44 having twist 31 by using temporary correction table P1 from the data of the combined synthesis plane of bar mirror 9a.

<Steps S4 and S5: Correction of Twist Error>

Measurement data obtaining device 52 measures measurement data in the X-direction and Y-direction by using bar mirror 9a in a lattice shape so as to respectively obtain the measurement data (see step S1). After data moving unit 53 moves the data so that lattice points 230 of XY coincide with each other in the Z-direction (see step S2), synthesis plane 44 obtained by synthesis plane calculator 54 combining pieces of the data (see step S3) has a state of including twist 31.

FIG. 9A illustrates an example of synthesis plane 39A having convex distortion 35 as an example of twist 31. FIG. 9B illustrates an example of synthesis plane 39B without twist 31. FIG. 9C illustrates an example of synthesis plane 39C having concave distortion 37 as another example of twist 31. Here, each of FIGs. 9A to 9C, it is assumed that the X-direction is a position of measurement data in the X-direction, the Y-direction is a position of measurement data in the Y-direction, dZs is a twist correction amount of an error in the Z-direction occurring due to twist 31, and a twist correction factor is φ. Here, twist correction amount dZs in the Z-direction is as the following. Twist correction amount dZs of the error in the Z-direction occurring due to twist 31 is represented as

$$dZs = X * Y * \varphi.$$

Hereinafter, the method of obtaining twist correction factor φ in step S4 will be described as two methods, that is, a first method and a second method. Either of these two non-claimed methods may be used.

<Step S4: (1) First Method>

In the first method, bar mirrors 9a is diagonally installed as illustrated by straight line 36 in FIG. 9B. For example, in the method, after bar mirror 9a is installed along straight line 36 in a diagonal direction of 45 degrees (in other words, a direction corresponding to a diagonal in a rectangular measurement range) respectively inclined by 45 degrees in the X-direction and Y-direction (step S4a) and measurement data in a diagonal direction (hereinafter, referred to as "measurement data in a diagonal line shape") is obtained (step S4b), twist correction factor determiner 55 calculates twist correction factor φ (step S4c).

(Step S4a) First, in order to calculate twist correction factor φ for correcting twist 31, by twist correction factor determiner 55, bar mirror 9a is installed along straight line 36 in a diagonal direction of 45 degrees respectively inclined by 45 degrees in the X-direction and Y-direction on lower stone surface table 91.

(Step S4b) Next, measurement data obtaining device 52 configured by X-coordinate detector 93Xa and Y-coordinate detector 93Ya obtains measurement data in a diagonal line shape.

(Step S4c) Next, when obtaining a surface shape of a synthesis plane by using temporary correction table P1 in a state in which the synthesis plane has twist 31, in a case where twist correction factor φ is inappropriate, measurement data in a diagonal line shape of bar mirror 9a installed along straight line 36 of installation line 40 having a diagonal of 45 degrees is transformed as illustrated by convex distortion 35 or concave distortion 37. This state is illustrated in FIGs. 9A and 9C.

FIG. 9B illustrates a measurement result in a case where synthesis plane 39B is not distorted. As measurement data in a diagonal line shape of bar mirror 9a installed along straight line 36 in a diagonal direction of 45 degrees of XY, it is possible to obtain accurate measurement data in a straight line shape along straight line 36.

Meanwhile, in a case where twist correction factor φ is inappropriate, as illustrated in FIG. 9A or 9C, as measurement data in a diagonal line shape of bar mirror 9a installed along straight line 36 having a diagonal of 45 degrees, instead of a straight line, a measurement result of measurement data in a diagonal line shape such as convex distortion 35 in FIG. 9A or concave distortion 37 in FIG. 9C can be obtained.

Here, as an example, twist correction factor determiner 55 can be configured by software which calculates the surface shape. Twist correction factor determiner 55 having such a configuration can recalculate the measured data by changing twist correction factor φ, and the software can be configured to revaluate bar mirror 9a installed along straight line 36 having a diagonal of 45 degrees. Since the inherent distortion of bar mirror 9a is removed as described in Calibration of Bar Mirror Data Distortion, it is possible to calibrate twist correction amount dZs having an error component occurring due to twist 31.

In this state, twist correction factor determiner 55 changes twist correction factor φ so that measurement data in a diagonal line shape of bar mirror 9a along straight line 36 having a diagonal of 45 degrees becomes straight line data which is an original bar mirror shape, convergence calculation or the like is performed so that a sum of squares of a difference between the line shape and the plane is minimized, and twist correction factor determiner 55 determines a value of twist correction factor φ and calculates twist correction amount dZs while correcting twist correction amount dZs according to the XY-position.

As described above, twist correction factor determiner 55 completes the calculation of twist correction factor φ in the first procedure for determining twist correction factor φ.

<Step S4: (2) Second Method>

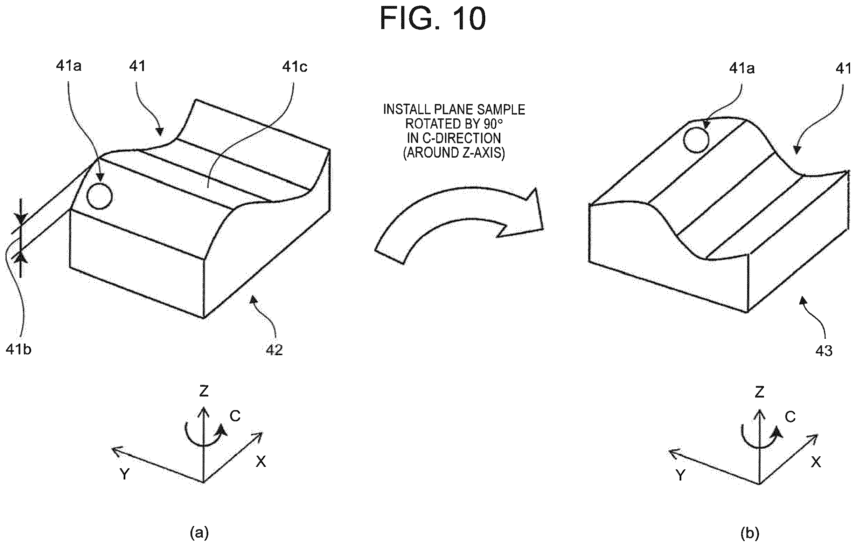

In the second method, after preparing other plane sample 41 (see FIG. 10) different from bar mirror 9a and obtaining measurement data of plane sample 41, measurement data is obtained again by rotating plane sample 41 by 90 degrees in a C-direction around the Z-axis and twist correction factor determiner 55 calculates twist correction factor φ.

(Exemplary Embodiment 2)

Hereinafter, an example of determining twist correction factor φ according to the second method different from the first method will be described.

(Step S4d) First, as illustrated in (a) of FIG. 10, plane sample 41 such as a planar mirror or the like having an undulation from a plane in the Z-direction, that is, distorted by, for example, approximately 100 nm, (in other words, having undulation 41b of 100 nm) is prepared. Plane sample 41 having a state of first position 42 in which posture determination mark 41a is at 0 degree around the Z-axis in the C-direction is disposed on lower stone surface table 91.

(Step S4e) Next, in a square lattice shape, plan area 41c (upper surface in FIG. 10) distorted in a state in which twist correction factor φ is not determined is measured in a rectangular shape, and measurement data obtaining device 52 obtains first measurement data of a surface shape by using temporary correction table P1 and the obtained first measurement data is stored in storage 51. Since twist correction factor φ is not calibrated, the first measurement data is data of the surface shape in a state of having a twist.

In (a) and (b) of FIG. 10, plane sample 41 illustrates an example of a shape distorted in a corrugated plate shape, but plane sample 41 may have any shape as long as plane sample 41 has a sample shape having a known rotation direction and rotation amount.

(Step S4f) Next, plane sample 41 is rotated by 90 degrees around the Z-axis in the C-direction, and is disposed on lower stone surface table 91 in a state of rotated second position 43. That is, second position 43 rotated by 90 degrees around the Z-axis in the C-direction is measured in a square lattice shape in a rectangular shape, measurement data obtaining device 52 obtains second measurement data of the surface shape by using temporary correction table P1 and the obtained second measurement data is stored in storage 51. Here, since twist correction factor φ is not calibrated,

the second measurement data is data of the surface shape in a state of having a twist in FIG. 10.

(Step S4g) Next, the second measurement data measured by rotating plane sample 41 by 90 degrees around the Z-axis in the C-direction is rotated by -90 degrees around the Z-axis in the C-direction by data moving unit 53, that is, the second measurement data is rotated by data moving unit 53 such that coordinates of the second measurement data become the same as that before the rotation to thereby obtain third measurement data. At this time, although the third measurement data of measured plane sample 41 has the same shape as the first measurement data since plane sample 41 is rotated by 90 degrees from the second measurement data, data of a shape of a portion having twist due to shape measurement device 90 is data corresponding to a shape different by 90 degrees around the Z-axis in the C-direction as compared with the first measurement data measured at installation at 0 degree around the Z-axis in the C-direction.

(Step S4h) As a plane measurement result of the same XY-position in the XY-directions at lattice points 230 between the third measurement data and the first measurement data measured through the same path by installing plane sample 41 by 0 degree around the Z-axis in the C-direction, difference calculator 58 calculates a data difference in the Z-direction. Since twist correction factor $\varphi$ is not calibrated in a result calculated by difference calculator 58, it is possible to obtain a difference result of the twist state illustrated in FIG. 9A or 9C.

(Step S4i) Next, twist correction factor determiner 55 performs convergence calculation or the like for changing twist correction factor $\varphi$ so as to a difference between the difference data calculated by difference calculator 58 and the plane being minimum, so that twist correction factor determiner 55 determines a new value of twist correction factor $\varphi$.

As described above, twist correction factor determiner 55 completes the calculation of twist correction factor $\varphi$ in the second procedure.

Twist correction factor determiner 55 calibrates twist correction factor $\varphi$ according to either the first method or the second method.

<Step S5: Operation Example of Flatness Calibration>

Corrector 56 uses calibrated twist correction factor $\varphi$. Specifically, in the measurement data of bar mirror 9a measured in an XY-lattice shape, corrector 56 corrects a distortion of bar mirror 9a for each of pieces of measurement data in a line shape. Lattice points 230 in the XY-directions are combined so that the XY-positions of the corrected measurement data in a line shape coincide with each other. In order to correct twist correction amount dZs of synthesis plane 39 by using twist correction factor $\varphi$, twist correction factor $\varphi$ is applied to the temporary correction table by corrector 56 and corrector 56 generates Z-axis reference plane data in which the twist of the Z-axis reference plane is calibrated, that is, a correction table. The correction table is used for calibration as a correction table for Z-axis reference mirror 7 of three-dimensional shape measurement device 90.

<Effect>

For example, as bar mirror 9a used in this calibration, it is possible to use bar mirror 9a which is calibrated by a national organization or the like and has flatness calibration data with traceability. When a measurement value of each of pieces of measurement data in a line shape is calibrated using bar mirror 9a, it is possible to perform flatness calibration with high accuracy and high reliability. That is, the pieces of measurement data in a line shape in the X-direction and Y-direction obtained by using bar mirror 9a are combined and the data at each of lattice points 230 is moved in the Z-direction towards each other, and twist correction factor $\varphi$ is determined so that twist correction amount dZs, which is a difference in the Z-direction, is minimized. By corrector 56 correcting twist correction amount dZs of synthesis plane 39 by using determined twist correction factor $\varphi$, it is possible to obtain a correction table for calibrating flatness of Z-axis reference mirror 7 within a measurement range in the XY-directions by using twist correction amount dZs of synthesis plane 39 corrected by using twist correction factor $\varphi$. With this configuration, it is possible to reduce an influence of an error at lattice point 230 of data for correcting a twist when performing highly-accurate flatness calibration, and it is possible to provide a flatness calibration method and a flatness calibration device with high accuracy.

The scope of protection is defined in the appended claims.

As compared with a case of providing a highly-accurate reference mirror which is difficult to be generated in a two-dimensional direction of XY, a flatness calibration method and a flatness calibration device according to the aspect of the present disclosure can obtain a bar-shaped reference plane with nanometer accuracy and higher accuracy by using a bar-shaped bar mirror.

By sequentially installing and measuring a bar mirror in a lattice shape, combining data as lattice points of XY coincide with each other, and calibrating a distorted shape at a position of a twist by using twist correction factor calculated by installation at 0 degree and 90 degrees in two directions, it is possible to perform more accurate calibration of a reference plane. By using this calibrated plane data as a Z-axis reference mirror of a three-dimensional shape measurement device, it is possible to realize a highly accurate three-dimensional shape measurement method and device.

**Claims**

1. A flatness calibration method comprising:

   moving sequentially one rectangular parallelepiped-shaped bar mirror (9a), which includes a plane having a scheduled measurement range with a size corresponding to a part of a measurement range in XY-directions of a Z-axis reference mirror (7) of a shape measurement device (90) and is formed in a bar shape, at each of positions in an X-direction, and after the bar mirror is rotated by 90° in an XY-plane at each of positions in a Y-direction within the XY-plane,
   sequentially measuring flatness at each of the positions of the plane of the bar mirror in line shapes, and obtaining measurement data in a line shape in the X-direction and measurement data in a line shape in the Y-direction, by a measurement data obtaining device (52);
   moving the measurement data in the line shape in the X-direction and the measurement data in the line shape in the Y-direction in a Z-direction, by a data moving unit (53) so that the measurement data in the line shape in the X-direction and the measurement data in the line shape in the Y-direction approach each other in the Z-direction, at an intersection position of a line in the X-direction including the obtained measurement data in the line shape in the X-direction and a line in the Y-direction including the obtained measurement data in the line shape in the Y-direction;
   synthesizing the measurement data in the line shape in the X-direction and the measurement data in the line shape in the Y-direction, which are moved by the data moving unit, and generating a synthesis plane (39) , by a synthesis plane calculator (54);
   obtaining a twist correction amount in the Z-direction at a lattice point of the measurement data in the line shape in the X-direction and the measurement data in the line shape in the Y-direction, when generating the synthesis plane, and determining a twist correction factor so as to minimize the obtained twist correction amount, by a twist correction factor determiner (55);
   correcting the twist correction amount of the synthesis plane by using the twist correction factor determined by the twist correction factor determiner, by a corrector (56); and
   calibrating flatness of the measurement range of the Z-axis reference mirror in the XY-directions by using the twist correction amount corrected by the corrector.

2. The flatness calibration method of Claim 1,
   wherein when the twist correction factor determiner determines the twist correction factor,
   defining a twist correction amount dZs in the Z-direction as a difference in the Z-direction occurring due to a twist of the synthesis plane, defining the twist correction factor as $\varphi$, and defining the twist correction amount dZs of the synthesis plane at a position of the X-direction and the Y-direction of the measured data in a line shape as dZs = $\varphi$ * X * Y,
   measuring flatness of the plane of the bar mirror in a line shape in a state in which the bar mirror is installed in a diagonal direction corresponding to a diagonal in the scheduled measurement range in a rectangular shape and inclined to both of the X-direction and the Y-direction, and obtaining measurement data in a diagonal line shape, and
   obtaining a twist correction amount in the Z-direction of the synthesis plane and the measurement data in the diagonal line shape obtained by the measurement data obtaining device, and determining the twist correction factor so as to minimize the twist correction amount, by the twist correction factor determiner.

3. The flatness calibration method of Claim 1,
   wherein when the twist correction factor determiner determines the twist correction factor,
   defining dZs as a twist correction amount which is an error in the Z-direction occurring due to a twist of the synthesis plane, defining the twist correction factor as $\varphi$, and defining the twist correction amount dZs of the synthesis plane at a position of the X-direction and the Y-direction of the measurement data in a line shape as dZs = $\varphi$ * X * Y,
   measuring an XY-plane in the X-direction and the Y-direction of a measurement sample including the XY-plane, and obtaining first measurement data, by the measurement data obtaining device,
   measuring the XY-plane in a state, in which the measurement sample is rotated by 90° around a Z-axis at a same position as an XY-center of the X-direction and the Y-direction and is installed, and obtaining second measurement data by the measurement data obtaining device,
   rotating coordinates of the second measurement data by 90° around the Z-axis in a direction opposite to a rotation direction of the measurement sample, and obtaining third measurement data, by the data moving unit,
   obtaining a difference in data in the Z-direction at an intersection at which XY-positions of the first measurement data and the third measurement data coincide with each other, by a difference calculator, and
   determining the twist correction factor by the twist correction factor determiner so as to minimize the difference obtained by the difference calculator.

4. A flatness calibration device comprising means configured to sequentially move one rectangular parallelepiped-shaped bar mirror (9a), which includes a plane having a scheduled measurement range with a size corresponding to a part of a measurement range in XY-directions of a Z-axis reference mirror of a shape measurement device (90) and is formed in a bar shape, at each of positions in an X-direction, and to rotate the bar mirror by 90° in an XY-plane, at each of positions in a Y-direction within the XY-plane, the flatness calibration device comprising:

> a measurement data obtaining device (52) that is configured to sequentially measure flatness at each of the positions of the plane of the bar mirror in line shapes and to obtain measurement data in a line shape in the X-direction and measurement data in a line shape in the Y-direction, when the flatness calibration device sequentially moves the rectangular parallelepiped-shaped bar mirror;
> a data moving unit (53) configured to move the measurement data in the line shape in the X-direction and the measurement data in the line shape in the Y-direction in a Z-direction so that the measurement data in the line shape in the X-direction and the measurement data in the line shape in the Y-direction approach each other in the Z-direction, at an intersection position of a line in the X-direction including the obtained measurement data in the line shape in the X-direction and a line in the Y-direction including the obtained measurement data in the line shape in the Y-direction;
> a synthesis plane calculator (54) configured to synthese the measurement data in the line shape in the X-direction and the measurement data in the line shape in the Y-direction, which are moved by the data moving unit, and to generate a synthesis plane;
> a twist correction factor determiner (55) configured to obtain a twist correction amount in the Z-direction at a lattice point of the measurement data in the line shape in the X-direction and the measurement data in the line shape in the Y-direction when generating the synthesis plane (39) and to determine a twist correction factor so as to minimize the obtained twist correction amount; and
> a corrector (56) configured to correct the twist correction amount of the synthesis plane (39) by using the twist correction factor determined by the twist correction factor determiner, the flatness calibration device being further configured to calibrate the flatness of the measurement range of the Z-axis reference mirror in the XY-directions by using the twist correction amount corrected by the corrector.

5. The flatness calibration device of Claim 4,
wherein, when the twist correction factor determiner determines the twist correction factor, the twist correction factor determiner is configured to define a twist correction amount $dZs$ in the Z-direction as a difference in the Z-direction occurring due to a twist of the synthesis plane, to define the twist correction factor as $\varphi$, and to define the twist correction amount $dZs$ of the synthesis plane at a position of the X-direction and the Y-direction of the measured data in a line shape as $dZs = \varphi * X * Y$, the measurement data obtaining device is configured to measure flatness of the plane of the bar mirror in a line shape in a state in which the bar mirror is installed in a diagonal direction corresponding to a diagonal in the scheduled measurement range in a rectangular shape inclined to both of the X-direction and the Y-direction, and to obtain measurement data in a diagonal line shape, and the twist correction factor determiner is configured to obtain a twist correction amount in the Z-direction of the synthesis plane and the measurement data in the diagonal line shape obtained by the measurement data obtaining device, and to determine the twist correction factor so as to minimize the twist correction amount.

6. The flatness calibration device of Claim 4,
wherein, when the twist correction factor determiner determines the twist correction factor,
the twist correction factor determiner is configured to define $dZs$ as a twist correction amount which is an error in the Z-direction occurring due to a twist of the synthesis plane, to define the twist correction factor as $\varphi$, and to define the twist correction amount $dZs$ of the synthesis plane at a position of the X-direction and the Y-direction of the measurement data in a line shape as $dZs = \varphi * X * Y$,
the measurement data obtaining device is configured to measure an XY-plane in the X-direction and the Y-direction of a measurement sample including the XY-plane, and to obtain first measurement data, the measurement data obtaining device is configured to measure the XY-plane in a state, in which the measurement sample is rotated by 90° around a Z-axis at a same position as an XY-center of the X-direction and the Y-direction and is installed, and to obtain second measurement data, the data moving unit is configured to rotate coordinates of the second measurement data by 90° around the Z-axis in a direction opposite to a rotation direction of the measurement sample, and to obtain third measurement data, a difference calculator is configured to obtain a difference in data in the Z-direction at an intersection at which XY-positions of the first measurement data and the third measurement data coincide with each other, and

the twist correction factor determiner is configured to determine the twist correction factor so as to minimize the difference obtained by the difference calculator.

**Patentansprüche**

1. Ein Verfahren zur Ebenheitskalibrierung mit:

sequenziellem Bewegen eines rechteckigen parallelepipedförmigen Stabspiegels (9a) mit einer Ebene, die einen geplanten Messbereich aufweist, dessen Größe einem Teil eines Messbereichs in XY-Richtung eines Z-Achsen-Referenzspiegels (7) einer Formmessvorrichtung (90) entspricht, und eine Stabform besitzt, an jeder Position in eine X-Richtung und, nach Drehen des Stabspiegels um 90° in einer XY-Ebene, an jeder Position in eine Y-Richtung innerhalb einer XY-Ebene;
sequenziellem Messen der Ebenheit an jeder Position der Ebene des Stabspiegels in Linienform und Erhalten von Messdaten in Linienform in X-Richtung und Messdaten in Linienform in Y-Richtung durch eine Messdaten-Erstellungsvorrichtung (52);
Bewegen der Messdaten in Linienform in X-Richtung und der Messdaten in Linienform in Y-Richtung in eine Z-Richtung durch eine Datenbewegungseinheit (53), sodass die Messdaten in Linienform in X-Richtung und die Messdaten in Linienform in Y-Richtung sich in Z-Richtung aneinander annähern, an einer Schnittpunktposition einer Linie in X-Richtung, einschließlich der erhaltenen Messdaten in Linienform in X-Richtung, und einer Linie in Y-Richtung, einschließlich der erhaltenen Messdaten in Linienform in Y-Richtung;
Zusammenführen der Messdaten in Linienform in X-Richtung und der Messdaten in Linienform in Y-Richtung, die durch die Datenbewegungseinheit bewegt werden, und Erstellen einer Syntheseebene (39) durch einen Syntheseebenenrechner (54);
Ermitteln eines Drallkorrekturwerts in Z-Richtung an einem Gitterpunkt der Messdaten in Linienform in X-Richtung und der Messdaten in Linienform in Y-Richtung, wenn die Syntheseebene erstellt wird, und Ermitteln eines Drallkorrekturfaktors, um den erhaltenen Drallkorrekturwert zu minimieren, durch eine Drallkorrekturfaktor-Bestimmungseinheit (55);
Korrigieren des Drallkorrekturwerts der Syntheseebene durch Verwenden des Drallkorrekturfaktors, der über die Drallkorrekturfaktor-Bestimmungseinheit ermittelt wurde, durch einen Korrektor (56); und
Kalibrieren der Ebenheit des Messbereichs des Z-Achsen-Referenzspiegels in XY-Richtung durch Verwenden des Drallkorrekturwerts, der durch den Korrektor korrigiert wurde.

2. Das Verfahren zur Ebenheitskalibrierung nach Anspruch 1,
wobei bei Ermitteln des Drallkorrekturfaktors durch die Drallkorrekturfaktor-Bestimmungseinheit das Verfahren umfasst:

Definieren eines Drallkorrekturwerts dZs in Z-Richtung als Differenz in Z-Richtung aufgrund eines Dralls der Syntheseebene, Definieren des Drallkorrekturfaktors als $\varphi$ und Definieren des Drallkorrekturwerts dZs der Syntheseebene an einer Position der X-Richtung und Y-Richtung der Messdaten in Linienform als dZs = $\varphi$*X*Y, Messen der Ebenheit der Ebene des Stabspiegels in Linienform in einem Zustand, in dem der Stabspiegel in einer diagonalen Richtung installiert wird, die einer Diagonale im geplanten Messbereich in Rechteckform entspricht und sowohl zur X-Richtung als auch zur Y-Richtung geneigt ist, und Erhalten von Messdaten in einer Diagonallinienform, und
Erhalten eines Drallkorrekturwerts in Z-Richtung der Syntheseebene und der Messdaten in Diagonallinienform durch die Messdaten-Erstellungsvorrichtung und Ermitteln des Drallkorrekturfaktors, um den Drallkorrekturwert zu minimieren, durch die Drallkorrekturfaktor-Bestimmungseinheit.

3. Das Verfahren zur Ebenheitskalibrierung nach Anspruch 1,
wobei bei Ermitteln des Drallkorrekturfaktors durch die Drallkorrekturfaktor-Bestimmungseinheit das Verfahren umfasst:

Definieren von dZs als Drallkorrekturwert, der einem Fehler in Z-Richtung aufgrund eines Dralls der Syntheseebene entspricht, Definieren des Drallkorrekturfaktors als $\varphi$ und Definieren des Drallkorrekturwerts dZs der Syntheseebene an einer Position der X-Richtung und Y-Richtung der Messdaten in Linienform als dZs = $\varphi$*X*Y, Messen einer XY-Ebene in der X-Richtung und Y-Richtung einer Messprobe, einschließlich der XY-Ebene, und Erhalten von ersten Messdaten durch die Messdaten-Erstellungsvorrichtung,
Messen der XY-Ebene in einem Zustand, in dem die Messprobe um 90° um eine Z-Achse an derselben Position wie eine XY-Mitte der X-Richtung und Y-Richtung gedreht wird und installiert wird, und Erhalten von zweiten Messdaten durch die Messdaten-Erstellungsvorrichtung,

Drehen der Koordinaten der zweiten Messdaten um 90° um die Z-Achse in eine entgegengesetzte Richtung zur Rotationsrichtung der Messprobe und Erhalten von dritten Messdaten durch die Datenbewegungseinheit,

Erhalten einer Differenz in Datenwerten in Z-Richtung an einem Schnittpunkt, an dem die XY-Positionen der ersten Messdaten und der dritten Messdaten zusammenfallen, durch einen Differenzrechner, und

Ermitteln des Drallkorrekturfaktors durch die Drallkorrekturfaktor-Bestimmungseinheit, um die mit dem Differenzrechner erhaltene Differenz zu minimieren.

4.  Eine Vorrichtung zur Ebenheitskalibrierung

mit Mitteln, die so konfiguriert sind, dass ein rechteckiger parallelepipedförmiger Stabspiegel (9a) mit einer Ebene, die einen geplanten Messbereich aufweist, dessen Größe einem Teil eines Messbereichs in XY-Richtung eines Z-Achsen-Referenzspiegels einer Formmessvorrichtung (90) entspricht, und eine Stabform besitzt, an jeder Position in eine X-Richtung sequenziell bewegt wird und dass der Stabspiegel um 90° in einer XY-Ebene an jeder Position in eine Y-Richtung innerhalb der XY-Ebene gedreht wird,

wobei die Vorrichtung zur Ebenheitskalibrierung umfasst:

eine Messdaten-Erstellungsvorrichtung (52), die so konfiguriert ist, dass die Ebenheit an jeder Position der Ebene des Stabspiegels in Linienform sequenziell gemessen wird und Messdaten in Linienform in X-Richtung und Messdaten in Linienform in Y-Richtung erhalten werden, wenn die Vorrichtung zur Ebenheitskalibrierung den rechteckigen parallelepipedförimigen Stabspiegel sequenziell bewegt;

eine Datenbewegungseinheit (53), die so konfiguriert ist, dass die Messdaten in Linienform in X-Richtung und die Messdaten in Linienform in Y-Richtung in eine Z-Richtung bewegt werden, sodass die Messdaten in Linienform in X-Richtung und die Messdaten in Linienform in Y-Richtung sich in Z-Richtung aneinander annähern, an einer Schnittpunktposition einer Linie in X-Richtung, einschließlich der erhaltenen Messdaten in Linienform in X-Richtung, und einer Linie in Y-Richtung, einschließlich der erhaltenen Messdaten in Linienform in Y-Richtung;

einen Syntheseebenenrechner (54), der so konfiguriert ist, dass die Messdaten in Linienform in X-Richtung und die Messdaten in Linienform in Y-Richtung, die durch die Datenbewegungseinheit bewegt werden, zusammengeführt werden und dass eine Syntheseebene erstellt wird;

eine Drallkorrekturfaktor-Bestimmungseinheit (55), die so konfiguriert ist, dass ein Drallkorrekturwert in Z-Richtung an einem Gitterpunkt der Messdaten in Linienform in X-Richtung und der Messdaten in Linienform in Y-Richtung erhalten wird, wenn die Syntheseebene (39) erstellt wird, und ein Drallkorrekturfaktor ermittelt wird, um den erhaltenen Drallkorrekturwert zu minimieren;

und einen Korrektor (56), der so konfiguriert ist, dass der Drallkorrekturwert der Syntheseebene (39) durch Verwenden des Drallkorrekturfaktors korrigiert wird, der über die Drallkorrekturfaktor-Bestimmungseinheit ermittelt wurde,

wobei die Vorrichtung zur Ebenheitskalibrierung ferner so konfiguriert ist, dass die Ebenheit des Messbereichs des Z-Achsen-Referenzspiegels in XY-Richtung durch Verwenden des Drallkorrekturwerts kalibriert wird, der durch den Korrektor korrigiert wurde.

5.  Die Vorrichtung zur Ebenheitskalibrierung nach Anspruch 4,

wobei bei Ermitteln des Drallkorrekturfaktors durch die Drallkorrekturfaktor-Bestimmungseinheit,

die Drallkorrekturfaktor-Bestimmungseinheit so konfiguriert ist, dass ein Drallkorrekturwert $dZs$ in Z-Richtung als Differenz in Z-Richtung aufgrund eines Dralls der Syntheseebene definiert wird, dass der Drallkorrekturfaktor als $\varphi$ definiert wird und dass der Drallkorrekturwert $dZs$ der Syntheseebene an einer Position der X-Richtung und Y-Richtung der Messdaten in Linienform als $dZs = \varphi * X * Y$ definiert wird,

die Messdaten-Erstellungsvorrichtung so konfiguriert ist, dass die Ebenheit der Ebene des Stabspiegels in Linienform in einem Zustand gemessen wird, in dem der Stabspiegel in einer diagonalen Richtung installiert wird, die einer Diagonale im geplanten Messbereich in Rechteckform entspricht und sowohl zur X-Richtung als auch zur Y-Richtung geneigt ist, und dass Messdaten in einer Diagonallinienform erhalten werden, und

die Drallkorrekturfaktor-Bestimmungseinheit so konfiguriert ist, dass ein Drallkorrekturwert in Z-Richtung der Syntheseebene und die Messdaten in Diagonallinienform, die durch die Messdaten-Erstellungsvorrichtung erstellt werden, erhalten werden und dass der Drallkorrekturfaktor ermittelt wird, um den Drallkorrekturwert zu minimieren.

6.  Die Vorrichtung zur Ebenheitskalibrierung nach Anspruch 4,

wobei bei Ermitteln des Drallkorrekturfaktors durch die Drallkorrekturfaktor-Bestimmungseinheit,

die Drallkorrekturfaktor-Bestimmungseinheit so konfiguriert ist, das $dZs$ als Drallkorrekturwert definiert wird, der einem Fehler in Z-Richtung aufgrund eines Dralls der Syntheseebene entspricht, dass der Drallkorrekturfaktor als φ definiert wird und dass der Drallkorrekturwert dZs der Syntheseebene an einer Position der X-Richtung und Y-Richtung der Messdaten in Linienform als dZs = φ*X*Y definiert wird,

die Messdaten-Erstellungsvorrichtung so konfiguriert ist, dass die XY-Ebene in der X-Richtung und Y-Richtung einer Messprobe, einschließlich der XY-Ebene, gemessen wird und dass erste Messdaten erhalten werden,

die Messdaten-Erstellungsvorrichtung so konfiguriert ist, dass die XY-Ebene in einem Zustand gemessen wird, in dem die Messprobe um 90° um eine Z-Achse an derselben Position wie eine XY-Mitte der X-Richtung und Y-Richtung gedreht wird und installiert wird, und dass zweite Messdaten erhalten werden,

die Datenbewegungseinheit so konfiguriert ist, dass die Koordinaten der zweiten Messdaten um 90° um die Z-Achse in eine entgegengesetzte Richtung zur Rotationsrichtung der Messprobe gedreht werden und dass dritte Messdaten erhalten werden,

ein Differenzrechner so konfiguriert ist, dass eine Differenz in Datenwerten in Z-Richtung an einem Schnittpunkt, an dem die XY-Positionen der ersten Messdaten und der dritten Messdaten zusammenfallen, erhalten wird, und

die Drallkorrekturfaktor-Bestimmungseinheit so konfiguriert ist, dass der Drallkorrekturfaktor so ermittelt wird, dass die mit dem Differenzrechner erhaltene Differenz minimiert wird.

## Revendications

1. Procédé d'étalonnage de planéité qui comprend :

    déplacer séquentiellement une barrette de miroir (9a) de forme parallélépipédique rectangulaire, qui inclut un plan qui présente une plage de mesures programmée avec une taille qui correspond à une partie d'une plage de mesures dans des directions XY d'un miroir de référence (7) d'axe Z d'un dispositif de mesure de forme (90) et a une forme de barrette, en chacune des positions dans une direction X, et après que la barrette de miroir a été tournée de 90° dans un plan XY en chacune des positions dans une direction Y à l'intérieur du plan XY, mesurer séquentiellement une planéité en chacune des positions du plan de la barrette de miroir dans des formes linéaires, et obtenir une donnée de mesure dans une forme linéaire dans la direction X et une donnée de mesure dans une forme linéaire dans la direction Y, par un dispositif d'obtention de données de mesure (52) ;
    déplacer la donnée de mesure dans la forme linéaire dans la direction X et la donnée de mesure dans la forme linéaire dans la direction Y dans une direction Z, par une unité de déplacement de données (53) de sorte que la donnée de mesure dans la forme linéaire dans la direction X et la donnée de mesure dans la forme linéaire dans la direction Y s'approchent l'une de l'autre dans la direction Z, en une position d'intersection d'une ligne dans la direction X qui inclut la donnée de mesure obtenue dans la forme linéaire dans la direction X et d'une ligne dans la direction Y qui inclut la donnée de mesure obtenue dans la forme linéaire dans la direction Y ;
    synthétiser la donnée de mesure dans la forme linéaire dans la direction X et la donnée de mesure dans la forme linéaire dans la direction Y, qui sont déplacées par l'unité de déplacement de données, et produire un plan de synthèse (39), par un calculateur de plan de synthèse (54) ;
    obtenir une quantité de correction de torsion dans la direction Z en un point de grille de la donnée de mesure dans la forme linéaire dans la direction X et de la donnée de mesure dans la forme linéaire dans la direction Y, au moment de produire le plan de synthèse, et déterminer un facteur de correction de torsion de manière à minimiser la quantité de correction de torsion obtenue, par un organe de détermination de facteur de correction de torsion (55) ;
    corriger la quantité de correction de torsion du plan de synthèse à l'aide du facteur de correction de torsion déterminé par l'organe de détermination de facteur de correction de torsion, par un correcteur (56) ; et
    étalonner une planéité de la plage de mesures du miroir de référence d'axe Z dans les directions XY à l'aide de la quantité de correction de torsion corrigée par le correcteur.

2. Procédé d'étalonnage de planéité selon la revendication 1,
    dans lequel, lorsque l'organe de détermination de facteur de correction de torsion détermine le facteur de correction de torsion,
    définir une quantité de correction de torsion dZs dans la direction Z en tant que différence dans la direction Z provoquée par une torsion du plan de synthèse, définir le facteur de correction de torsion en tant que φ, et définir la quantité de correction de torsion dZs du plan de synthèse en une position de la direction X et de la direction Y de la donnée de mesure dans une forme linéaire en tant que dZs = φ*X*Y,
    mesurer une planéité du plan de la barrette de miroir dans une forme linéaire dans un état dans lequel la barrette de miroir est installée dans une direction diagonale qui correspond à une diagonale dans la plage de mesures programmée dans une forme rectangulaire et inclinée par rapport à tant la direction X que la direction Y, et obtenir une donnée de mesure dans une forme linéaire diagonale, et

obtenir une quantité de correction de torsion dans la direction Z du plan de synthèse et la donnée de mesure dans la forme linéaire diagonale obtenue par le dispositif d'obtention de données de mesure, et déterminer le facteur de correction de torsion de manière à minimiser la quantité de correction de torsion, par l'organe de détermination de facteur de correction de torsion.

3.  Procédé d'étalonnage de planéité selon la revendication 1,

dans lequel, lorsque l'organe de détermination de facteur de correction de torsion détermine le facteur de correction de torsion,

définir dZs en tant que quantité de correction de torsion qui est une erreur dans la direction Z provoquée par une torsion du plan de synthèse, définir le facteur de correction de torsion en tant que φ, et définir la quantité de correction de torsion dZs du plan de synthèse en une position de la direction X et de la direction Y de la donnée de mesure dans une forme linéaire en tant que dZs = φ*X*Y,

mesurer un plan XY dans la direction X et dans la direction Y d'un échantillon de mesure qui inclut le plan XY, et obtenir une première donnée de mesure, par le dispositif d'obtention de données de mesure,

mesurer le plan XY dans un état dans lequel l'échantillon de mesure est tourné de 90° autour d'un axe Z en une même position qu'un centre XY de la direction X et de la direction Y et est installé, et obtenir une deuxième donnée de mesure, par le dispositif d'obtention de données de mesure,

faire tourner des coordonnées de la deuxième donnée de mesure de 90° autour de l'axe Z dans une direction opposée à une direction de rotation de l'échantillon de mesure, et obtenir une troisième donnée de mesure, par l'unité de déplacement de données,

obtenir une différence dans une donnée dans la direction Z en une intersection au niveau de laquelle des positions XY de la première donnée de mesure et de la troisième donnée de mesure coïncident l'une avec l'autre, par un calculateur de différence, et

déterminer le facteur de correction de torsion par l'organe de détermination de facteur de correction de torsion de manière à minimiser la différence obtenue par le calculateur de différence.

4.  Dispositif d'étalonnage de planéité qui comprend un moyen configuré pour déplacer séquentiellement une barrette de miroir (9a) de forme parallélépipédique rectangulaire, qui inclut un plan qui présente une plage de mesures programmée avec une taille qui correspond à une partie d'une plage de mesures dans des directions XY d'un miroir de référence d'axe Z d'un dispositif de mesure de forme (90) et a une forme de barrette, en chacune des positions dans une direction X, et pour faire tourner la barrette de miroir de 90° dans un plan XY, en chacune des positions dans une direction Y à l'intérieur du plan XY,

le dispositif d'étalonnage de planéité comprenant :

un dispositif d'obtention de données de mesure (52) qui est configuré pour mesurer séquentiellement une planéité en chacune des positions du plan de la barrette de miroir dans des formes linéaires, et pour obtenir une donnée de mesure dans une forme linéaire dans la direction X et une donnée de mesure dans une forme linéaire dans la direction Y, lorsque le dispositif d'étalonnage de planéité déplace séquentiellement la barrette de miroir de forme parallélépipédique rectangulaire ;

une unité de déplacement de données (53) configurée pour déplacer la donnée de mesure dans la forme linéaire dans la direction X et la donnée de mesure dans la forme linéaire dans la direction Y dans une direction Z de sorte que la donnée de mesure dans la forme linéaire dans la direction X et la donnée de mesure dans la forme linéaire dans la direction Y s'approchent l'une de l'autre dans la direction Z, en une position d'intersection d'une ligne dans la direction X qui inclut la donnée de mesure obtenue dans la forme linéaire dans la direction X et d'une ligne dans la direction Y qui inclut la donnée de mesure obtenue dans la forme linéaire dans la direction Y ;

un calculateur de plan de synthèse (54) configuré pour synthétiser la donnée de mesure dans la forme linéaire dans la direction X et la donnée de mesure dans la forme linéaire dans la direction Y, qui sont déplacées par l'unité de déplacement de données, et pour produire un plan de synthèse ;

un organe de détermination de facteur de correction de torsion (55) configuré pour obtenir une quantité de correction de torsion dans la direction Z en un point de grille de la donnée de mesure dans la forme linéaire dans la direction X et de la donnée de mesure dans la forme linéaire dans la direction Y, au moment de produire le plan de synthèse (39), et pour déterminer un facteur de correction de torsion de manière à minimiser la quantité de correction de torsion obtenue ; et

un correcteur (56) configuré pour corriger la quantité de correction de torsion du plan de synthèse (39) à l'aide du facteur de correction de torsion déterminé par l'organe de détermination de facteur de correction de torsion, le dispositif d'étalonnage de planéité étant en outre configuré pour étalonner la planéité de la plage de mesures du miroir de référence d'axe Z dans les directions XY à l'aide de la quantité de correction de torsion corrigée par le correcteur.

5. Dispositif d'étalonnage de planéité selon la revendication 4,
dans lequel, lorsque l'organe de détermination de facteur de correction de torsion détermine le facteur de correction de torsion,
l'organe de détermination de facteur de correction de torsion est configuré pour définir une quantité de correction de torsion dZs dans la direction Z en tant que différence dans la direction Z provoquée par une torsion du plan de synthèse, pour définir le facteur de correction de torsion en tant que φ, et pour définir la quantité de correction de torsion dZs du plan de synthèse en une position de la direction X et de la direction Y de la donnée de mesure dans une forme linéaire en tant que dZs = φ*X*Y,
le dispositif d'obtention de données de mesure est configuré pour mesurer une planéité du plan de la barrette de miroir dans une forme linéaire dans un état dans lequel la barrette de miroir est installée dans une direction diagonale qui correspond à une diagonale dans la plage de mesures programmée dans une forme rectangulaire inclinée par rapport à tant la direction X que la direction Y, et pour obtenir une donnée de mesure dans une forme linéaire diagonale, et
l'organe de détermination de facteur de correction de torsion est configuré pour obtenir une quantité de correction de torsion dans la direction Z du plan de synthèse et la donnée de mesure dans la forme linéaire diagonale obtenue par le dispositif d'obtention de données de mesure, et pour déterminer le facteur de correction de torsion de manière à minimiser la quantité de correction de torsion.

6. Dispositif d'étalonnage de planéité selon la revendication 4,
dans lequel, lorsque l'organe de détermination de facteur de correction de torsion détermine le facteur de correction de torsion,
l'organe de détermination de facteur de correction de torsion est configuré pour définir dZs en tant que quantité de correction de torsion qui est une erreur dans la direction Z provoquée par une torsion du plan de synthèse, pour définir le facteur de correction de torsion en tant que φ, et pour définir la quantité de correction de torsion dZs du plan de synthèse en une position de la direction X et de la direction Y de la donnée de mesure dans une forme linéaire en tant que dZs = φ*X*Y,
le dispositif d'obtention de données de mesure est configuré pour mesurer un plan XY dans la direction X et dans la direction Y d'un échantillon de mesure qui inclut le plan XY, et pour obtenir une première donnée de mesure,
le dispositif d'obtention de données de mesure est configuré pour mesurer le plan XY dans un état dans lequel l'échantillon de mesure est tourné de 90° autour d'un axe Z en une même position qu'un centre XY de la direction X et de la direction Y et est installé, et pour obtenir une deuxième donnée de mesure,
l'unité de déplacement de données est configurée pour faire tourner des coordonnées de la deuxième donnée de mesure de 90° autour de l'axe Z dans une direction opposée à une direction de rotation de l'échantillon de mesure, et pour obtenir une troisième donnée de mesure,
un calculateur de différence est configuré pour obtenir une différence dans une donnée dans la direction Z en une intersection au niveau de laquelle des positions XY de la première donnée de mesure et de la troisième donnée de mesure coïncident l'une avec l'autre, et
l'organe de détermination de facteur de correction de torsion est configuré pour déterminer le facteur de correction de torsion de manière à minimiser la différence obtenue par le calculateur de différence.

FIG. 1A

90

100

94

8

93Ya

3

3X

3Y

28

3X

91

4

15

6

92

93Za

7

5

93Xa

27

1

9

2

Z C

B Y

A X

FIG. 1B

# FIG. 1C

CONTROLLER ——————————————————— 100

| DATA MOVING UNIT | —— 53 |

| SYNTHESIS PLANE CALCULATOR | —— 54 |

| DISTORTION CORRECTION FACTOR DETERMINER | —— 55 |

| CORRECTOR | —— 56 |

| DIFFERENCE CALCULATOR | —— 58 |

| STORAGE | —— 51 |

| Z-AXIS STAGE | —— 2 |

| XY-STAGE | —— 3 |

| OSCILLATION FREQUENCY STABILIZED He-Ne LASER | —— 4 |

| X-AXIS LASER EMITTER | —— 27 |

| Y-AXIS LASER EMITTER | —— 28 |

| CALCULATION PROCESSOR | —— 94 |

MEASUREMENT DATA OBTAINING DEVICE ——————— 52

| X-COORDINATE DETECTOR | —— 93Xa |

| Y-COORDINATE DETECTOR | —— 93Ya |

| Z-COORDINATE DETECTOR | —— 93Za |

# FIG. 1D

START

S1 | OBTAIN MEASUREMENT DATA IN LINE SHAPE IN X-DIRECTION AND Y-DIRECTION
· S1A: MEASURE MEASUREMENT DATA IN LINE SHAPE IN X-DIRECTION
· S1B: MEASURE MEASUREMENT DATA IN LINE SHAPE IN Y-DIRECTION

S2 | MOVE PIECES OF MEASUREMENT DATA IN Z-DIRECTION AT LATTICE POINT

S3 | CALCULATE SYNTHESIS PLANE

S4 | DETERMINE DISTORTION CORRECTION FACTOR $\phi$
· S4b: OBTAIN MEASUREMENT DATA IN DIAGONAL LINE SHAPE
· S4c: CALCULATE DISTORTION CORRECTION FACTOR $\phi$
OR
· S4e: OBTAIN FIRST MEASUREMENT DATA
· S4f: OBTAIN SECOND MEASUREMENT DATA ROTATED BY 90° AROUND Z-AXIS
· S4g: OBTAIN THIRD MEASUREMENT DATA ROTATED BY -90° AROUND Z-AXIS
· S4h: OBTAIN DATA DIFFERENCE AT INTERSECTION
· S4i: CALCULATE DISTORTION CORRECTION FACTOR $\phi$

S5 | CORRECT DISTORTION CORRECTION AMOUNT OF SYNTHESIS PLANE BY USING DISTORTION CORRECTION FACTOR $\phi$

END

# FIG. 2

# FIG. 3

PLANE ACCURACY (nm)

# FIG. 4

# FIG. 5

# FIG. 6

EP 3 591 335 B1

# FIG. 7

# FIG. 8

# FIG. 9A

39A 35
(39) (40)

# FIG. 9B

39B 36
(39) (40)

# FIG. 9C

39C 37
(39) (40)

# FIG. 10

INSTALL PLANE SAMPLE
ROTATED BY 90°
IN C-DIRECTION
(AROUND Z-AXIS)

(a)

(b)

EP 3 591 335 B1

# FIG. 11

# FIG. 12

# FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3046635 B
- JP 2002054920 A
- JP 5494446 B
- EP 1219924 A
- JP 2015175603 A

**Non-patent literature cited in the description**

- **FRANK SIEWERT et al.** *Proceedings of SPIE,* 2005, vol. 5921